(19) Europäisches Patentamt
European Patent Office
Office européen des brevets

(11) EP 4 679 551 A1

(12) **EUROPEAN PATENT APPLICATION**
published in accordance with Art. 153(4) EPC

(43) Date of publication:
**14.01.2026 Bulletin 2026/03**

(21) Application number: **24771259.9**

(22) Date of filing: **14.03.2024**

(51) International Patent Classification (IPC):
***H01M 10/056*** *(2010.01)* ***H01M 10/052*** *(2010.01)*
***H01M 10/054*** *(2010.01)* ***H01M 10/0569*** *(2010.01)*
***H01M 10/0565*** *(2010.01)*

(52) Cooperative Patent Classification (CPC):
**H01M 10/052; H01M 10/054; H01M 10/056; H01M 10/0565; H01M 10/0569**

(86) International application number:
**PCT/KR2024/095536**

(87) International publication number:
**WO 2024/191260 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.03.2023 KR 20230033383**
**26.05.2023 KR 20230068398**

(71) Applicant: **SK On Co., Ltd.**
**Seoul 03161 (KR)**

(72) Inventors:
- **LEE, Han Sol**
**Daejeon 34124 (KR)**
- **RYU, Hye Min**
**Daejeon 34124 (KR)**
- **PARK, Myung Soo**
**Daejeon 34124 (KR)**
- **BAN, Hee Jung**
**Daejeon 34124 (KR)**
- **CHOI, Jae Hoon**
**Daejeon 34124 (KR)**
- **GO, Hyeon Jin**
**Daejeon 34124 (KR)**

(74) Representative: **Prüfer & Partner mbB**
**Patentanwälte · Rechtsanwälte**
**Sohnckestraße 12**
**81479 München (DE)**

(54) **SECONDARY BATTERY ELECTROLYTE, MANUFACTURING METHOD THEREFOR, AND LITHIUM SECONDARY BATTERY COMPRISING SAME**

(57) An electrolyte for a lithium secondary battery according to embodiments of the present disclosure may include a composite membrane including a lithium salt, an organic polymer, and an inorganic electrolyte, and a flame retardant compound including a phosphorus-containing functional group. The weight ratio of the flame retardant compound to the composite membrane may be 0.004 to 0.3. Accordingly, the flame retardancy and electrical properties of the secondary battery may be improved.

EP 4 679 551 A1

[FIG. 1]

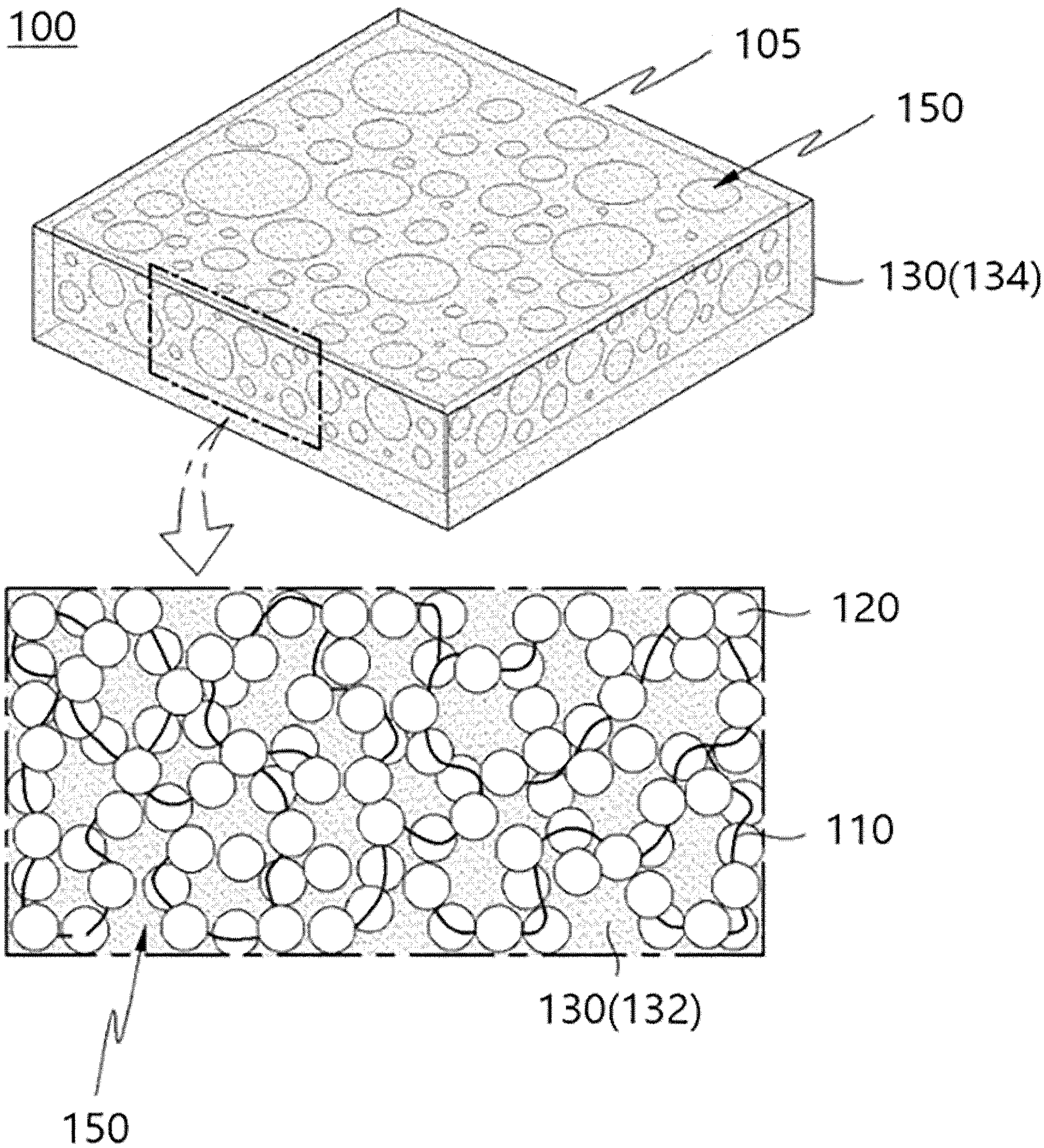

## Description

[Technical Field]

The present disclosure relates to an electrolyte for a secondary battery, a method for preparing the same, and a lithium secondary battery including the electrolyte. More specifically, the present disclosure relates to an electrolyte for a secondary battery including a flame retardant compound, a method for preparing the same, and a lithium secondary battery including the electrolyte.

[Background Art]

A secondary battery is a battery that can be repeatedly charged and discharged. With the rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as an electric vehicle, a hybrid vehicle, etc., as their power sources.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

Since commercially available lithium secondary batteries have mainly employed liquid electrolytes to date, there are safety issues such as leakage, ignition, and explosion due to sudden environmental changes, including temperature fluctuations, external impacts and the like. To address these problems, research has been conducted to solidify the electrolyte, thereby enhancing stability and increasing energy density.

All-solid-state batteries may include solid-state electrolytes such as gel polymers, oxides, sulfides, or composite polymers as the electrolyte. Accordingly, stability against ignition and explosion caused by external impacts or external environmental fluctuations may be enhanced.

[Summary of Invention]

[Problems to be Solved by Invention]

An object of the present disclosure is to provide an electrolyte for a secondary battery with improved electrochemical stability and ionic conductivity.

Another object of the present disclosure is to provide a method for manufacturing an electrolyte for a secondary battery with improved electrochemical stability and ionic conductivity.

Still another object of the present disclosure is to provide a lithium secondary battery with improved stability and electrochemical characteristics.

[Means for Solving Problems]

An electrolyte for a secondary battery according to exemplary embodiments may include: a lithium salt; a composite membrane including an organic polymer and an inorganic electrolyte; and a flame retardant compound including a phosphorus-containing functional group. The weight ratio of the flame retardant compound to the composite membrane may be 0.004 to 0.3.

In some embodiments, the inorganic electrolyte may include an oxide-based solid electrolyte.

In some embodiments, the flame retardant compound may include fluorine atoms.

In some embodiments, the phosphorus-containing functional group may include at least one of a phosphate group, a phosphite group, a phosphonate group, and a phosphazene group.

In some embodiments, the flame retardant compound may be a flame retardant polymer.

In some embodiments, the flame retardant compound may include a first flame retardant compound that is in contact with the interior and surface of the composite membrane, and a second flame retardant compound that is distributed on the exterior of the composite membrane.

In some embodiments, the composite membrane may include pores, and at least a portion of the first flame retardant compound may be distributed within the pores.

In some embodiments, the content of the organic polymer, based on the total weight of the composite membrane, may be 5% by weight to 95% by weight.

In some embodiments, the composite membrane may include pores, and the porosity of the composite

membrane may be 50% to 80%.

A lithium secondary battery according to exemplary embodiments may include: a case; an electrode assembly including a cathode and anode repeatedly stacked; and the above-described electrolyte for a secondary battery, which is disposed between the cathode and the anode in the electrode assembly within the case, or distributed around the electrode assembly.

In some embodiments, the composite membrane of the electrolyte for a secondary battery may be disposed as an electrolyte layer between the cathode and the anode in the electrode assembly.

In a method for manufacturing an electrolyte for a secondary battery according to exemplary embodiments, a first mixture may be prepared by mixing an organic polymer, an inorganic electrolyte, a first solvent and a second solvent. The first mixture may be dried to form a composite membrane. The composite membrane may be impregnated with a second mixture including a flame retardant monomer and an electrolyte. The second mixture may be cured to prepare an electrolyte for a secondary battery.

In some embodiments, the solubility of the organic polymer in the first solvent may be greater than the solubility of the organic polymer in the second solvent.

In some embodiments, the organic polymer in the first mixture may be dissolved in the first solvent and not dissolved in the second solvent.

In some embodiments, the step of drying the first mixture to form a composite membrane may include: removing the first solvent at a first temperature; and removing the second solvent at a second temperature.

In some embodiments, the first temperature may be lower than the second temperature.

In some embodiments, the electrolyte may include a lithium salt.

In some embodiments, the second mixture may further include a thermal initiator, and the step of curing the second mixture may include heat-treating the second mixture.

In some embodiments, the second mixture may further include a photoinitiator, and the step of curing the second mixture may include irradiating the second mixture with light.

[Advantageous effects]

The electrolyte for a secondary battery manufactured according to exemplary embodiments of the present disclosure may have self-extinguishing properties. Accordingly, the stability against ignition during repeated charge and discharge cycles or at high temperatures may be improved.

In addition, the electrolyte for a secondary battery manufactured according to exemplary embodiments of the present disclosure may not be in a liquid state, thereby improving the mechanical properties of an electrolyte layer including the electrolyte.

The lithium secondary battery according to exemplary embodiments of the present disclosure may include the electrolyte for a secondary battery, thereby improving both roomtemperature and high-temperature safety, and enhancing cycle life characteristics even during repeated charge and discharge cycles.

The electrolyte for a lithium secondary battery of the present disclosure, the method for manufacturing the same, and the lithium secondary battery including the electrolyte may be widely applied in green technology fields, such as electric vehicles, battery charging stations, as well as solar power generation, wind power generation, and the like, which use the batteries. The electrolyte for a lithium secondary battery of the present disclosure, the method for manufacturing the same, and the lithium secondary battery including the electrolyte may be used in eco-friendly electric vehicles, hybrid vehicles, and the like, which are aimed at mitigating climate change by reducing air pollution and greenhouse gas emissions.

[Brief Description of Drawings]

FIG. 1 is a schematic diagram illustrating the structure of an electrolyte for a secondary battery according to exemplary embodiments.

FIG. 2 is a schematic flowchart describing the processes of a method for manufacturing an electrolyte for a secondary battery according to exemplary embodiments.

FIG. 3 is a schematic diagram describing the method for manufacturing an electrolyte for a secondary battery according to exemplary embodiments.

FIG. 4 is a schematic diagram illustrating the method for manufacturing an electrolyte for a secondary battery according to exemplary embodiments.

FIGS. 5 to 8 are photographs showing the thermal shrinkage over time of the electrolyte layers for a secondary battery prepared according to exemplary embodiments, and the electrolyte-immersed separation membranes and electrolyte layers prepared according to comparative examples.

FIGS. 9 to 11 are photographs showing the combustion of the electrolyte layers for a secondary battery prepared according to exemplary embodiments, and the electrolyte-immersed separation membranes and electrolyte layers prepared according to comparative examples.

FIG. 12 is a graph showing the changes in open circuit voltage (OCV) over time for the lithium secondary batteries manufactured according to exemplary embodiments and comparative examples.

FIG. 13 is a graph showing the changes in discharge capacity (capacity retention) according to the number of charge and discharge cycles for the lithium secondary batteries manufactured according to exemplary embodiments and comparative examples.

FIG. 14 is a graph showing the changes in current over time measured by cyclic voltammetry (CV) for coin cells including the electrolyte layers for a lithium secondary battery prepared according to exemplary embodiments and comparative examples.

[Mode for Carrying out Invention]

According to exemplary embodiments, a method for manufacturing an electrolyte for a secondary battery including a flame retardant compound and an electrolyte for a secondary battery manufactured by the method are provided. In addition, a lithium secondary battery including an electrolyte layer including the electrolyte for a secondary battery is provided.

Hereinafter, embodiments of the present disclosure will be described in detail with reference to the accompanying drawings. However, these are merely illustrative and the present disclosure is not limited to the specific embodiments described as examples.

Unless otherwise defined herein, when a portion such as a layer, film, thin film, region, or plate, etc. is present "on" or "above" another portion, it may include not only the case where the portion is present "directly on" the other portion, but also the case where another portion is present between them.

If there is an isomer of a compound represented by a formula used herein, the compound represented by the corresponding formula refers to the representative formula including such isomers.

The term "flame retardancy" as used herein refers to the ability to prevent or suppress combustion, wherein a sample burns while in contact with a flame (ignition source) but self-extinguishes once the flame is removed. Flame retardancy may be evaluated based on the time required for the flame to be extinguished after removing a torch used to supply a flame of a certain amount of heat to the sample for 1 second or more. It may be evaluated that a shorter extinguishing time indicates better flame retardancy.

Specifically, the flame retardant polymer may be prepared in the form of a glass fiber-impregnated film or a self-supporting film having a diameter of 19 mm, and when ignited by supplying a flame of a certain amount of heat for 1 second or more using a torch and then removing the torch, it may be extinguished within 2 seconds, specifically within 1 second, and more specifically within 0.5 seconds.

FIG. 1 is a schematic diagram illustrating the structure of an electrolyte for a secondary battery according to exemplary embodiments.

Referring to FIG. 1, the electrolyte for a secondary battery (hereinafter, also abbreviated as "electrolyte") may include a lithium salt, a composite membrane 105, and a flame retardant compound 130. In some embodiments, the electrolyte may include a lithium salt, the composite membrane 105, the flame retardant compound 130, and an electrolyte solution.

For convenience of illustration, in FIG. 1, the flame retardant compound 130 is illustrated as being formed within and around the composite membrane 105, but the position where the flame retardant compound 130 is formed is not limited. For example, the flame retardant compound may be disposed within a case constituting the secondary battery. For example, the flame retardant compound 130 may be disposed within the internal pores and surface of the composite membrane 105, on the external surface of the composite membrane 105, and around an electrode assembly disposed within the case.

According to exemplary embodiments, the composite membrane 105 may include an organic polymer 110 and an inorganic electrolyte 120. For example, the organic polymer 110 and the inorganic electrolyte 120 may be mixed and dispersed within the composite membrane, and may be in physical contact or bonded with each other. The composite membrane may be a freestanding membrane.

The lithium salt may be represented by, for example, $Li^+X^-$. As an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

The organic polymer 110 may be an ion-conductive polymer. The organic polymer may be provided as a polymer matrix. The polymer matrix may have low fluidity within the electrolyte, and may not inhibit the migration of lithium ions in the

electrolyte even when the electrolyte solvent is included.

For example, the organic polymer 110 may include repeating units of ether-based, styrene-based, or fluorinated hydrocarbon-based groups.

In some embodiments, the organic polymer 110 may include polyvinylidene fluoride (PVDF), polystyrene (PS), polyether sulfone (PES), polyurethane (PU), polyethylene oxide (PEO), polyvinylidene fluoride-co-hexafluoropropylene (PVDF-co-HFP), polyimide (PI), polymethyl methacrylate (PMMA), polyvinyl chloride (PVC), polyvinyl alcohol (PVA), polyacrylonitrile (PAN), polyethyl methacrylate (PEMA), polycaprolactone (PCL), polyvinyl pyrrolidone (PVP), polysulfone (PSF), or polyamide-imide (PAI). In one embodiment, the organic polymer 110 may include at least one of polyvinylidene fluoride, polystyrene, polyether sulfone, and polyurethane. Accordingly, the mobility of lithium-ion conduction within the composite membrane may be improved, thereby enhancing ionic conductivity.

The inorganic electrolyte 120 may be an oxide-based solid electrolyte. For example, the oxide-based solid electrolyte may include an ion-conductive compound containing a metal or oxygen. For example, the oxide-based solid electrolytes may include LLTO compounds, LLZO compounds, LLZTO compounds such as $Li_{6.4}La_3Zr_{1.4}Ta_{0.6}O_{12}$, $Li_6La_2CaTa_2O_{12}$, $Li_6La_2ANb_2O_{12}$ (A is Ca or Sr), $Li_2Nd_3TeSbO_{12}$, $Li_3BO_{2.5}N_{0.5}$, $Li_9SiAlO_8$, LAGP compounds, LATP compounds, $Li_{1+x}Ti_{2-x}Al_xSi_y(PO_4)_3$ ($0 \leq x \leq 1$, $0 \leq y \leq 1$), $LiAl_xZr_{2-x}(PO_4)_3$ ($0 \leq x \leq 1$, $0 \leq y \leq 1$), $LiTi_xZr_{2-x}(PO_4)_3$ ($0 \leq x \leq 1$, $0 \leq y \leq 1$) LISICON compounds, LIPON compounds, perovskite compounds, NASICON compounds, and metal oxides such as $Al_2O_3$, $ZnO_2$, $Ce_2O_2$, $TiO_2$, $ZrO_2$, $HfO_2$, $MnO_2$, MgO, $WO_2$, and $V_2O_5$.

In some embodiments, the inorganic electrolyte 120 may be an oxide-based solid electrolyte containing lithium. For example, the oxide-based solid electrolyte containing lithium may include an LLTO compound, an LLZO compound (e.g., a garnet-type LLZO compound), a NASICON compound, a LATP compound, or a perovskite compound, etc. Accordingly, the ionic conductivity and mechanical strength of the electrolyte 100 may be improved, thereby suppressing lithium dendrite growth and enhancing high-temperature stability and cycle life characteristics.

In some embodiments, the composite membrane may include a sintered body or an unsintered body (i.e., a green body) of the inorganic electrolyte 120, but specifically, may include an unsintered body of the inorganic electrolyte 120. More specifically, the composite membrane may not include a sintered body of the inorganic electrolyte 120.

According to exemplary embodiments, the flame retardant compound 130 may include a phosphorus-containing functional group. In some embodiments, the phosphorus-containing functional group may include at least one of a phosphate group, a phosphite group, a phosphonate group, and a phosphazene group. For example, the flame retardant compound 130 may be a compound formed by polymerizing or copolymerizing a flame retardant monomer that includes at least one of a phosphate group, a phosphite group, a phosphonate group, and a phosphazene group. Accordingly, side reactions between the flame retardant compound 130 and the organic polymer 110, the inorganic electrolyte 120, and compounds such as a lithium salt or the electrolyte solution, may be suppressed. Furthermore, the flame retardant compound 130 may include a phosphorus-containing functional group, thereby blocking oxygen during combustion and preventing thermal runaway.

In some embodiments, the flame retardant compound 130 may include fluorine atoms together with the phosphorus-containing functional group. For example, the flame retardant compound 130 may be a compound formed by polymerizing or copolymerizing a flame retardant monomer containing a phosphorus-containing functional group and fluorine atoms. Specifically, the flame retardant compound 130 may be a flame retardant polymer containing a phosphorus-containing functional group and fluorine atoms, and more specifically, a flame retardant polymer or flame retardant copolymer. The fluorine atoms may form radicals in the event of a fire, thereby inhibiting the propagation of the combustion reaction. Accordingly, the flame retardant properties of the electrolyte 100 may be improved by the flame retardant compound 130.

In one embodiment, the flame retardant compound 130 may include a monomer, an oligomer, a polymer, or a mixture thereof.

In some embodiments, the flame retardant compound 130 may be a compound formed by polymerizing or copolymerizing a flame retardant monomer having a thermally reactive functional group and/or a photoreactive functional group. For example, the flame retardant monomer may be a compound containing a thermally reactive functional group that is polymerized by heat. For example, the flame retardant monomer may be a compound containing a photoreactive functional group that is polymerized upon irradiation with light. For example, (meth)acrylate groups, acryl groups, ether groups, alcohol groups, alkoxy groups, and the like may be used as thermally reactive functional groups and/or photoreactive functional groups. For example, the flame retardant compound 130 may include a group derived from the thermally reactive functional group and/or the photoreactive functional group. In some embodiments, the flame retardant compound 130 may include a first flame retardant compound 132 distributed within the composite membrane 105 and in contact with the surface of the composite membrane 105, and a second flame retardant compound 134 distributed on the exterior of the composite membrane 105.

The first flame retardant compound 132 and the second flame retardant compound 134 may be substantially the same compound. For example, the first flame retardant compound 132 and the second flame retardant compound 134 may be the above-described flame retardant compound 130 and may be formed inside the secondary battery as the same

compound.

In some embodiments, the composite membrane 105 may include pores 150. At least a portion of the first flame retardant compound 132 may be distributed within the pores 150. For example, at least a portion of the first flame retardant compound 132 may be disposed on the inner surface of the pores 150 included in the composite membrane 105. For example, at least a portion of the first flame retardant compound 132 may be disposed in a gel form on the inner surface of the pores 150 included in the composite membrane 105.

The term "gel form" as used herein refers to a wet solid material that contains a liquid substance but has low fluidity. For example, the term "gel form" may refer to a material that maintains its form as a solid while containing a second flame retardant compound and a liquid, such as an electrolyte solution.

In one embodiment, the porosity of the composite membrane 105 may be 50% to 80%, 50% to 75%, 55% to 75%, 55% to 70%, or 60% to 70%. Within this range, pores 150 may be sufficiently formed in the composite membrane 105, allowing the first flame retardant compound 132 to be positioned inside the composite membrane 105 at the above-described ratio. Accordingly, the ionic conductivity and flame retardancy of the electrolyte 100 may be improved, and the resistance may be reduced.

In one embodiment, the first flame retardant compound 132 may be distributed on the outer surface of the composite membrane 105. For example, the first flame retardant compound 132 may be distributed on the outer surface of the composite membrane 105 while in contact with the composite membrane 105. For example, the first flame retardant compound 132 may be disposed in a gel form on the outer surface of the composite membrane 105 while in contact with the composite membrane 105. Accordingly, even when heat is applied to the composite membrane 105, the composite membrane 105 may be protected from the heat by the first flame retardant compound 132.

In some embodiments, the second flame retardant compound 134 may be present separately from the composite membrane 105 in a gel form. For example, the second flame retardant compound 134 may be disposed inside the case constituting a secondary battery. For instance, it may be disposed in a form that surrounds the composite membrane 105. For example, the second flame retardant compound may be disposed in a form that is distributed around an electrode assembly disposed inside the case.

According to exemplary embodiments, the weight ratio of the flame retardant compound 130 to the composite membrane may be 0.004 to 0.3, 0.01 to 0.3, 0.02 to 0.3, or 0.02 to 0.2. For example, the weight ratio of the content of the flame retardant compound 130 to the content of the composite membrane may be within the above range. Within the above range, the ionic conductivity of the electrolyte 100 may be enhanced while the flame retardancy is improved. In one embodiment, the weight ratio of the flame retardant compound 130 to the composite membrane may be 0.02 to 0.18, 0.024 to 0.18, or 0.03 to 0.18. Within the above range, the ionic conductivity of the electrolyte 100 may be further enhanced while the flame retardancy is improved.

According to exemplary embodiments, the content of the organic polymer 110, based on the total weight of the composite membrane, may be 5% by weight ("wt%") to 95 wt%, 5 wt% to 70 wt%, or 5 wt% to 60 wt%. In one embodiment, the content of the organic polymer 110, based on the total weight of the composite membrane, may be 5 wt% to 50 wt%, 5 wt% to 40 wt%, or 5 wt% to 30 wt%. Within this range, contact between the composite membrane and the electrode may be enhanced by the organic polymer 110, thereby reducing the interfacial resistance between the composite membrane and the electrode. In addition, the content of the inorganic electrolyte 120 may be increased, thereby improving ionic conductivity.

In some embodiments, the weight ratio of the flame retardant compound 130 to the organic polymer 110 may be 0.004 to 3.6, 0.0042 to 3.6, 0.005 to 3.6, or 0.08 to 3.6. For example, the weight ratio of the content of the flame retardant compound 130 to the content of the organic polymer 110 may be within the above range. Within the above range, the resistance between the composite membrane and the electrode may be reduced while the flame retardancy of the electrolyte 100 is improved. In one embodiment, the weight ratio of the flame retardant compound 130 to the organic polymer 110 may be 0.01 to 3.6, 0.03 to 3.6, 0.04 to 3.6, 0.07 to 3.6, 0.08 to 3.6, or 0.1 to 3.6. Within the above range, the flame retardant effect of the flame retardant compound 130 may be maintained while the interfacial resistance between the electrolyte layer and the electrode is further reduced.

In some embodiments, the weight ratio of the flame retardant compound 130 to the inorganic electrolyte 120 may be 0.004 to 3.6, 0.0042 to 1.8, 0.0042 to 1.0, or 0.0042 to 0.6. For example, the weight ratio of the content of the flame retardant compound 130 to the content of the inorganic electrolyte 120 may be within the above range. Within the above range, the ionic conductivity and flame retardancy of the electrolyte 100 may be improved simultaneously. In one embodiment, the weight ratio of the flame retardant compound 130 to the inorganic electrolyte 120 may be 0.0042 to 0.5, 0.042 to 0.4, 0.042 to 0.3, or 0.042 to 0.26. Within this range, the ionic conductivity of the electrolyte 100 may be further improved while the flame retardant effect of the flame retardant compound 130 is maintained

FIG. 2 is a schematic flowchart describing the processes of a method for manufacturing an electrolyte for a secondary battery according to exemplary embodiments. Hereinafter, the method for manufacturing the above-described electrolyte for a secondary battery will be described with reference to FIG. 2.

Referring to FIG. 2, a first mixture may be prepared by mixing an organic polymer, an inorganic electrolyte, a first

solvent and a second solvent (e.g., step S10).

In some embodiments, the solubility of the organic polymer in the first solvent may be greater than that of the organic polymer in the second solvent. For example, the solubility of the organic polymer in the first solvent may be 1 g/100 g or more, 33 g/100 g or more, 10 g/100 g or more, 100 g/100 g or more, or 100 g/100 g to 1,000 g/100 g. For example, the solubility of the organic polymer in the second solvent may be less than 1 g/100 g, less than 0.1 g/100 g, or less than 0.01 g/100 g.

For example, the organic polymer within the first mixture may be dissolved in the first solvent, and not be dissolved in the second solvent.

For example, the organic polymer may be soluble in the first solvent. Accordingly, the organic polymer may be dissolved in the first solvent.

For example, the organic polymer may be insoluble in the second solvent. Accordingly, the organic polymer may not be substantially dissolved in the second solvent.

The term "solubility" refers to the mass (g) of the organic polymer dissolved in 100 g of the first or second solvent. For example, a solubility of 1 g/100 g may mean that 1 g of the organic polymer is dissolved in 100 g of the first or second solvent.

In some embodiments, the first solvent may be miscible with the second solvent. For example, the first solvent and the second solvent may be mixed or blended.

The organic polymer and the inorganic electrolyte may be the organic polymer and inorganic electrolyte described above.

The first solvent may be a solvent that dissolves the organic polymer and may be miscible with the second solvent. The first solvent may include, for example, tetrahydrofuran (THF), 2-methyltetrahydrofuran (2-Me-THF), N-methyl-2-pyrrolidone (NMP), 1,3-dioxolane, vinylene carbonate (VC), 1,4-dioxane, dimethylformamide (DMF), dimethylacetamide (DMAc), ethyl methyl carbonate (EMC), dimethyl carbonate (DMC), diethyl carbonate (DEC), and the like. These may be used alone or in combination of two or more thereof. In one embodiment, the first solvent may be tetrahydrofuran.

The second solvent may be a solvent that does not dissolve the organic polymer and may be miscible with the first solvent. The second solvent may include, for example, heptane, octane, nonane, decane, dodecane, 2,2,4-trimethylpentane, ethylene glycol, methylcyclohexane (MCH), 2-methyl-1-butanol, decahydronaphthalene, ethylene carbonate (EC), propylene carbonate (PC), and the like. These may be used alone or in combination of two or more thereof. In one embodiment, the second solvent may be octane.

In one embodiment, the boiling point of the first solvent may be lower than that of the second solvent. Accordingly, the first solvent may vaporize at a lower temperature than the second solvent.

According to exemplary embodiments, the first mixture may be dried to form a composite membrane (e.g., step S20). The first mixture may be cast onto a substrate (e.g., a glass substrate or a plastic substrate, etc.) and dried.

In some embodiments, in step S20, the first solvent may be removed at a first temperature (e.g., first drying), and the second solvent may be removed at a second temperature (e.g., second drying). Accordingly, the first solvent may be preferentially removed from the first mixture, after which the second solvent may be removed.

FIGS. 3 and 4 are schematic diagrams illustrating the first drying and the second drying, respectively.

Referring to FIG. 3, the first mixture may be dried to remove the first solvent from the first mixture.

Referring to FIG. 4, after removing the first solvent, the remaining first mixture may be dried to remove the second solvent 170. The second solvent 170 may be removed to prepare the composite membrane 105.

In one embodiment, the first drying and the second drying may be performed sequentially. In one embodiment, the second drying may be performed after a certain period of time has elapsed following the first drying.

The first mixture may be in a state in which an organic polymer and a second solvent are mixed together via the first solvent. The first solvent may be preferentially removed from the first mixture at a first temperature, thereby separating the organic polymer and the second solvent 170 from each other. For example, when the first solvent is removed, the organic polymer and the inorganic electrolyte of the first mixture may be separated from the second solvent while still in physical contact or bonded together.

After removing the first solvent at a first temperature, the second solvent 170 may be removed at a second temperature to form a composite membrane. Accordingly, the composite membrane may include pores 150 formed by removing the second solvent at the sites previously occupied by the second solvent.

In some embodiments, the first temperature may be lower than the second temperature. Accordingly, while the first solvent is removed at the first temperature, the second solvent 170 may not be removed, or its removal rate may be significantly reduced.

For example, the first temperature may be 25 °C to 200 °C, 35 °C to 200 °C, 50 °C to 200 °C, 50 °C to 150 °C, 50 °C to 100 °C, or 50 °C to 85 °C. Within the above range, the first solvent in the first mixture may be preferentially removed while the second solvent 170 is not removed by vaporization.

For example, the second temperature may be 70 °C to 300 °C, 70 °C to 250 °C, 70 °C to 200 °C, 70 °C to 175 °C, or

70 °C to 150 °C. Within the above range, the second solvent 170 may be removed by vaporization at the second temperature while not being removed by vaporization during the removal of the first solvent at the first temperature.

In one embodiment, the first solvent may be removed at the first temperature for 10 minutes to 2 hours, 10 minutes to 1.5 hours, or 30 minutes to 1.25 hours. In one embodiment, the second solvent 170 may be removed at the second temperature for 30 minutes to 12 hours, 30 minutes to 6 hours, or 30 minutes to 3 hours. Within this range, the first solvent and the second solvent 170 may be sequentially and sufficiently vaporized and removed.

In some embodiments, the content of the organic polymer, based on the total weight of the composite membrane, may be included in the above-described amount. For example, the content of the organic polymer, based on the total weight of the composite membrane, may be 5 wt% to 95 wt%, 5 wt% to 70 wt%, or 5 wt% to 60 wt%. In one embodiment, the content of the organic polymer, based on the total weight of the composite membrane, may be 5 wt% to 50 wt%, 5 wt% to 40 wt%, or 5 wt% to 30 wt%.

For example, when preparing the first mixture, the organic polymer may be mixed so that it is included within the above-described content range.

According to exemplary embodiments, the composite membrane may be impregnated with a second mixture including a flame retardant monomer and an electrolyte solution (e.g., step S30). For example, the composite membrane may be impregnated with the second mixture prepared by immersing the flame retardant monomer in the electrolyte solution.

In some embodiments, the composite membrane may be impregnated with the second mixture by injecting the second mixture into the case while an electrode assembly, in which the composite membrane is disposed as an electrolyte layer between a cathode and an anode, is inserted into the case.

In some embodiments, the weight ratio of the flame retardant monomer to the composite membrane may be 0.004 to 0.3, 0.01 to 0.3, 0.02 to 0.3, or 0.02 to 0.2. For example, the weight ratio of the content of the flame retardant monomer to the content of the composite membrane may be within the above range. In one embodiment, the weight ratio of the flame retardant monomer to the composite membrane may be 0.02 to 0.18, 0.024 to 0.18, or 0.03 to 0.18. For example, the content of the flame retardant monomer included in the second mixture relative to the content of the composite membrane may be within the above range. Accordingly, the flame retardant monomer may be included in the composite membrane within the above range. In addition, after the second mixture is cured, the ratio of the content of the flame retardant compound to the content of the composite membrane may be within the above range based on weight.

In some embodiments, the composite membrane may be a composite membrane formed using the above-described method. Accordingly, a porous composite membrane may be used as a composite membrane for preparing an electrolyte for a secondary battery. Using the porous composite membrane, the flame retardant monomer may be positioned within the pores of the porous composite membrane. For example, the flame retardant monomer may be impregnated into the pores of the porous composite membrane.

In some embodiments, the flame retardant monomer may be a flame retardant monomer including a phosphorus-containing functional group. For example, the phosphorus-containing functional group may include at least one of a phosphate group, a phosphite group, a phosphonate group, and a phosphazene group. Accordingly, the flame retardancy of the electrolyte for a secondary battery may be improved. In one embodiment, the flame retardant monomer may be a flame retardant monomer including both a phosphorus-containing functional group and fluorine atoms. Accordingly, the flame retardancy of the electrolyte for a secondary battery may be further improved.

In some embodiments, the flame retardant monomer may include a thermally reactive functional group and/or a photoreactive functional group. For example, the flame retardant monomer may be a compound containing a thermally reactive functional group that is polymerized by heat. For example, the flame retardant monomer may be a compound containing a photoreactive functional group that is polymerized upon irradiation with light. For example, (meth)acrylate groups, acryl groups, ether groups, alcohol groups, alkoxy groups, and the like may be used as thermally reactive functional groups and/or photoreactive functional groups.

In one embodiment, the flame retardant monomer may include a phosphorus-containing functional group and at least one of a thermally reactive functional group and a photoreactive functional group. In one embodiment, the flame retardant monomer may include a phosphorus-containing functional group, fluorine atoms, and at least one of a thermally reactive functional group and a photoreactive functional group.

In some embodiments, the electrolyte solution may include a thermal initiator and/or a photoinitiator to induce thermal curing and/or photocuring of the flame retardant monomer. In one embodiment, the content of the thermal initiator and/or the photoinitiator may be 0.5 parts by weight ("wt parts") to 2 wt parts based on 100 wt parts of the flame retardant monomer included in each electrolyte composition.

For example, the thermal initiator may include azo compounds such as 2,2-azobis(2-cyanobutane), 2,2-azobis(methylbutyronitrile), 2,2'-azobisisobutyronitrile (AIBN), azobisdimethyl valeronitrile (AMVN), or peroxide compounds such as benzoyl peroxide, acetyl peroxide, dilauryl peroxide, di-tert-butyl peroxide, cumyl peroxide, or hydrogen peroxide.

For example, the photoinitiator may include acyl phosphines, 2-hydroxy-2-methyl-1-phenylpropane-1-one

(HMPP), benzoin ether, dialkyl acetophenone, hydroxyl alkylketone, phenyl glyoxylate, benzyl dimethyl ketal, 2,4,6-trimethyl-benzoyl-trimethyl phosphine oxide, and α-aminoketones.

In some embodiments, the electrolyte solution may include a lithium salt. The lithium salt may include the above-described lithium salt. Accordingly, the ionic conductivity of the electrolyte for a secondary battery may be improved.

In some embodiments, the electrolyte solution may include an organic solvent. For example, the organic solvent may include carbonate-based organic solvents such as propylene carbonate (PC), ethylene carbonate (EC), diethyl carbonate (DEC), dimethyl carbonate (DMC), ethyl methyl carbonate (EMC), methyl propyl carbonate (MPC), dipropyl carbonate (DPC), and vinylene carbonate (VC), etc.; or solvents such as dimethyl sulfoxide, acetonitrile, dimethoxyethane, diethoxyethane, sulfolane, gamma-butyrolactone, propylene sulfite and tetrahydrofuran. These may be used alone or in combination of two or more thereof.

In one embodiment, the electrolyte solution may further include an additive. The additive may include a cyclic carbonate compound, a fluorine-substituted cyclic carbonate compound, a sultone compound, a cyclic sulfate compound, a cyclic sulfite compound, a phosphate compound, a borate compound and the like.

The cyclic carbonate compound may include vinylene carbonate, vinyl ethylene carbonate (VEC), etc.

The fluorine-substituted cyclic carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluoro phosphate, etc.

The borate compound may include lithium bis(oxalate) borate, etc.

In one embodiment, the organic solvent may be a carbonate-based organic solvent. Accordingly, the electrical stability and chemical stability of the electrolyte for a secondary battery may be further improved.

According to exemplary embodiments, the second mixture may be cured (e.g., step S40). Accordingly, an electrolyte for a secondary battery may be prepared.

In some embodiments, the flame retardant monomer may be polymerized or copolymerized while the second mixture is cured. Accordingly, the electrolyte for a secondary battery may include a flame retardant compound.

In one embodiment, among the flame retardant monomers, the flame retardant monomers disposed on the inner surface of the pores of the composite membrane or on the outer surface of the composite membrane in contact with the composite membrane may be polymerized or copolymerized to form a first flame retardant compound.

In one embodiment, among the flame retardant monomers, the flame retardant monomers that are not disposed on the inner surface of the pores of the composite membrane or the outer surface of the composite membrane may be polymerized or copolymerized to form a second flame retardant compound. For example, the flame retardant monomers distributed around the electrode assembly disposed within the case constituting the secondary battery without being in contact with the composite membrane, may be polymerized or copolymerized to form a second flame retardant compound.

Therefore, the second mixture may be cured to form a flame retardant compound including the first flame retardant compound and the second flame retardant compound, derived from the flame retardant monomers.

In some embodiments, the weight of the flame retardant monomer in the total weight of the composite membrane may be substantially equal to that of the flame retardant compound in the total weight of the composite membrane. For example, the change (decrease or increase) in the weight of the flame retardant monomer during the polymerization or copolymerization into the flame retardant compound may be 0.0001 wt% or less, or 0.00001 wt% or less, based on the total weight of the composite membrane. Accordingly, the weight ratio of the flame retardant monomer relative to the weight of the composite membrane may be substantially equal to the weight ratio of the flame retardant compound relative to the weight of the composite membrane.

In some embodiments, curing the second mixture may include heat treating the second mixture. For example, by heat curing the second mixture, the flame retardant monomer within the composite membrane may be polymerized or copolymerized to form a flame retardant compound.

In some embodiments, the heat treatment may be performed at a temperature ranging from 40 °C to 120 °C, from 50 °C to 120 °C, from 50 °C to 100 °C, from 60 °C to 100 °C, or from 60 °C to 90 °C.

In some embodiments, the heat treatment may be performed for 20 minutes to 2 hours, 20 minutes to 1.5 hours, 30 minutes to 1.5 hours, 40 minutes to 1.5 hours, or 40 minutes to 70 minutes.

Within the above temperature and time ranges, the flame retardant monomer within the second mixture may be sufficiently polymerized or copolymerized.

In some embodiments, curing the second mixture may include irradiating the second mixture with light. For example, by photocuring the second mixture, the flame retardant monomer within the composite membrane may be polymerized or copolymerized to form a flame retardant compound. Accordingly, the polymerization or copolymerization reaction of the flame retardant monomer may be performed at a relatively low temperature. Therefore, damage to the composite membrane caused by high-temperature heat treatment may be prevented.

In some embodiments, the UV photocuring process for photopolymerization may be performed using light having a wavelength of 250 nm to 400 nm and an intensity of 800 $mW/cm^2$ to 1100 $mW/cm^2$. In one embodiment, the UV photocuring process may be performed for 5 to 20 seconds. Within the wavelength and intensity ranges, the flame retardant monomer within the second mixture may be sufficiently polymerized or copolymerized.

The lithium secondary battery according to exemplary embodiments may include a case, an electrode assembly including repeatedly stacked cathodes and anodes, and an electrolyte for a secondary battery disposed within the case, between the cathodes and the anodes in the electrode assembly, or distributed around the electrode assembly.

In some embodiments, the electrode assembly may include a cathode, an anode disposed to face the cathode, and an electrolyte layer disposed between the cathode and the anode.

The cathode may include a cathode current collector and a cathode active material layer disposed on at least one surface of the cathode current collector.

The cathode current collector may include stainless steel, nickel, aluminum, titanium, or an alloy thereof. The cathode current collector may also include aluminum or stainless steel having a surface treated with carbon, nickel, titanium, or silver. For example, the cathode current collector may have a thickness of 10 μm to 50 μm.

The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Formula 1 below.

[Formula 1] $Li_xNi_aM_bO_{2+}z$

In Formula 1, x, a, b and z may satisfy $0.9 \leq x \leq 1.2$, $0.6 \leq a \leq 0.99$, $0.01 \leq b \leq 0.4$, and $-0.5 \leq z \leq 0.1$. As described above, M may include Co, Mn and/or Al.

The chemical structure represented by Formula 1 indicates a bonding relationship between elements included in the layered structure or the crystal structure of the cathode active material, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form a bond, and it should be understood that this case is also included within the chemical structure range represented by Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may serve as an auxiliary active element which contributes to the capacity/output activity of the cathode active material together with Co or Mn, such as Al.

For example, the cathode active material or the lithium-nickel metal oxide may include a layered structure or a crystal structure represented by Formula 1-1 below.

[Formula 1-1] $Li_xNi_aM1_{b1}M2_{b2}O_{2+z}$

In Formula 1-1, M1 may include Co, Mn and/or Al. M2 may include the above-described auxiliary elements. In Formula 1-1, x, a, b1, b2 and z may satisfy $0.9 \leq x \leq 1.2$, $0.6 \leq a \leq 0.99$, $0.01 \leq b1+b2 \leq 0.4$, and $-0.5 \leq z \leq 0.1$.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of the lithium-nickel metal oxide particles, or may penetrate through the surface of the lithium-nickel metal composite oxide particles to be incorporated into the bonding structure represented by Formula 1 or Formula 1-1 above.

The cathode active material may include a nickel-cobalt-manganese (NCM)-based lithium oxide. In this case, an NCM-based lithium oxide with an increased content of nickel may be used.

Nickel (Ni) may be provided as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

In this regard, as the content of Ni increases, long-term storage stability and cycle life stability of the cathode or the secondary battery may be relatively reduced, and side reactions with the electrolyte may also increase. However, according to exemplary embodiments, by including Co, the cycle life stability and capacity retention characteristics may be improved through Mn while maintaining electrical conductivity.

The content of Ni (e.g., the molar fraction of nickel based on the total molar amount of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may include, for example, a manganese (Mn)-rich active material, a lithium (Li)-rich layered oxide (LLO)/over-lithiated oxide (OLO)-based active material, or a cobalt (Co)-less active material, which has a chemical structure or a crystal structure represented by Formula 2.

[Formula 2] $$p[Li_2MnO_3]\cdot(1-p)[Li_qJO_2]$$

In Formula 2, p and q may satisfy $0<p<1$, and $0.9\leq q\leq 1.2$, and J may include at least one element selected from Mn, Ni, Co, Fe, Cr, V, Cu, Zn, Ti, Al, Mg and B.

In some embodiments, the cathode active material may be a sodium-based active material or a potassium-based active material. The sodium-based active material may include a layered structure or a crystal structure in which Li of Formula 1, Formula 1-1 and/or Formula 2, described above, is substituted with Na and/or K.

In some embodiments, the cathode active material may be a calcium-based active material. The calcium-based active material may include, for example, a calcium-cobalt active material and a calcium-phosphate active material.

For example, a cathode slurry may be prepared by mixing the cathode active material in a solvent. The cathode slurry may be coated on the cathode current collector, and then dried and roll-pressed to prepare the cathode active material layer. The coating process may be performed using methods such as gravure coating, slot die coating, simultaneous multilayer die coating, imprinting, doctor blade coating, dip coating, bar coating or casting, etc., but is not limited thereto. The cathode active material layer may further include a binder, and optionally may further include an electrolyte, a conductive material, a thickener or the like.

Solvents used in the preparation of the cathode active material layer may include, for example, N-methyl-2-pyrrolidone (NMP), dimethylformamide (DMF), dimethylacetamide (DMA), N,N-dimethylaminopropylamine (DMAPA), ethylene oxide (EO), tetrahydrofuran (THF), etc.

In one embodiment, the electrolyte included in the cathode active material layer may be the above-described electrolyte for a secondary battery. In one embodiment, the electrolyte included in the cathode active material layer may be the above-described inorganic electrolyte, but the inorganic electrolyte included in the cathode active material layer may be equal to or different from the inorganic electrolyte included in the composite membrane. For example, the secondary battery may be provided as an all-solid-state battery including the above-described electrolyte or inorganic electrolyte.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR), etc. In one embodiment, a PVDF-based binder may be used as the cathode binder.

The conductive material may be added to enhance the conductivity and/or mobility of lithium ions or electrons of the cathode active material layer. For example, the conductive material may include carbon-based conductive materials such as graphite, carbon black, acetylene black, Ketjen black, graphene, carbon nanotubes, vapor-grown carbon fibers (VGCFs) or carbon fibers, and/or metal-based conductive materials, including perovskite materials, such as tin, tin oxide, titanium oxide, $LaSrCoO_3$, and $LaSrMnO_3$, but is not limited thereto.

The cathode active material layer may further include a thickener and/or a dispersant. In one embodiment, the cathode active material layer may include a thickener such as carboxymethyl cellulose (CMC).

The anode may include an anode current collector and an anode active material layer disposed on at least one surface of the anode current collector.

The anode current collector may include, for example, a copper foil, a nickel foil, a stainless steel foil, a titanium foil, a nickel foam, a copper foam, a polymer substrate coated with conductive metal and the like. The anode current collector may have a thickness of, for example, 10 $\mu$m to 50 $\mu$m, but is not limited thereto.

The anode active material layer may include an anode active material. As the anode active material, a material capable of intercalating and deintercalating lithium ions may be used. For example, as the anode active material, carbon-based materials such as crystalline carbon, amorphous carbon, carbon composites, or carbon fibers, etc.; lithium metal; a lithium alloy; a silicon (Si)-containing material or a tin (Sn)-containing material, etc. may be used.

Examples of the amorphous carbon may include hard carbon, soft carbon, coke, mesocarbon microbead (MCMB), mesophase pitch-based carbon fiber (MPCF) or the like.

Examples of the crystalline carbon may include graphite-based carbon such as natural graphite, artificial graphite, graphitized coke, graphitized MCMB, graphitized MPCF or the like

The lithium metal may include pure lithium metal or lithium metal having a protective layer formed thereon for suppressing dendrite growth, etc. In one embodiment, a lithium metal-containing layer deposited or coated on the anode current collector may be used as the anode active material layer. In one embodiment, a lithium thin film layer may be used as the anode active material layer.

Elements included in the lithium alloy may include aluminum, zinc, bismuth, cadmium, antimony, silicon, lead, tin, gallium or indium, etc.

The silicon-containing material may provide further increased capacity characteristics. The silicon-containing material may include Si, SiOx ($0<x<2$), a metal-doped SiOx ($0<x<2$), a silicon-carbon composite, etc. The metal may include lithium and/or magnesium, and the metal-doped SiOx ($0<x<2$) may include a metal silicate.

For example, an anode slurry may be prepared by mixing the anode active material in a solvent. The anode slurry may be coated/deposited to the anode current collector, and then dried and roll-pressed to prepare the anode active material layer. The coating process may be performed using substantially the same method as the method of preparing the cathode active material layer. The anode active material layer may further include a binder, and optionally may further include an electrolyte, a conductive material, a thickener, etc.

In some embodiments, the anode may include the anode active material layer in the form of a lithium metal formed through a deposition/coating process.

The solvent for the anode active material layer may include, for example, water, pure water, deionized water, distilled water, ethanol, isopropanol, methanol, acetone, n-propanol, t-butanol, etc.

In one embodiment, the electrolyte included in the anode active material layer may be the above-described electrolyte for a secondary battery. In one embodiment, the electrolyte included in the anode active material layer may be the above-described inorganic electrolyte, but the inorganic electrolyte included in the anode active material layer may be equal to or different from the inorganic electrolyte included in the composite membrane. For example, the secondary battery may be provided as an all-solid-state battery including the above-described electrolyte or inorganic electrolyte.

The above-described materials that can be used when fabricating the cathode as the binder, conductive material and thickener may also be used.

In some embodiments, a styrene-butadiene rubber-based binder, carboxymethyl cellulose, polyacrylic acid-based binder, poly(3,4-ethylenedioxythiophene (PEDOT)-based binder, and the like may be used as an anode binder.

In some embodiments, an electrolyte layer may be interposed between the cathode and the anode within the electrode assembly. For example, an electrode cell may be defined by the cathode, the anode and the electrolyte layer, and a plurality of the electrode cells may be stacked to form an electrode assembly. For example, the electrode assembly may be formed by winding, lamination, folding, or the like.

In some embodiments, the weight ratio of the flame retardant compound to the composite membrane may be constant regardless of the number of electrode cells included in the electrode assembly. For example, when the electrode assembly includes one electrode cell, the weight ratio of the flame retardant compound to the composite membrane may be within the above-described range. In addition, when the electrode assembly includes two or more electrode cells, the weight ratio of the flame retardant compound to the composite membrane may also be within the above-described range.

In some embodiments, the composite membrane of the above-described electrolyte for a secondary battery may be disposed as an electrolyte layer between the cathode and the anode. For example, the electrolyte layer may include a composite membrane impregnated with the above-described flame retardant compound. For example, in the composite membrane impregnated with the flame retardant compound, the flame retardant compound may be disposed in a gel form on the inner surface of the pores of the composite membrane.

In some embodiments, a portion of the electrolyte for a secondary battery may be distributed in a gel form around the electrode assembly. For example, a portion of the flame retardant compound included in the electrolyte for a secondary battery may also be distributed in a gel form around the electrode assembly.

For example, electrode tabs (cathode tabs and anode tabs) may protrude from the cathode current collector and the anode current collector, respectively, and may extend to one side of a case. The electrode tabs may be fused together with the one side of the case and connected to electrode leads (a cathode lead and an anode lead) that extend or are exposed to the outside of the case.

For example, a pouch-type case, a prismatic case, a cylindrical case, or a coin-type case, etc. may be used as the case.

Hereinafter, embodiments of the present disclosure will be further described with reference to specific experimental examples. However, the examples and comparative examples included in the experimental examples are provided merely for illustrative purposes of the present disclosure and are not intended to limit the scope of the appended claims. It will be apparent to those skilled in the art that various changes and modifications can be made within the scope and spirit of the present disclosure, and such changes and modifications are to be regarded as falling within the scope of the appended claims.

## Examples and Comparative Examples

### Example 1

(1) Preparation of electrolyte for a secondary battery

A first mixture was prepared by mixing polyvinylidene fluoride (PVDF) as an organic polymer and LLZTO ($Li_{6.4}La_3Zr_{1.4}Ta_{0.6}O_{12}$) as an inorganic electrolyte at a weight ratio of 50:50 with a mixed solvent including tetrahydrofuran (THF) and octane at a volume ratio of 1:1.

The first mixture was primary dried at 80 °C for 1 hour, and then secondary dried at 125 °C for 45 minutes to form a composite membrane.

(2) Preparation of second mixture

A second mixture was prepared by mixing a flame retardant monomer, represented by Formula 3 below, with a 1.0 M $LiPF_6$ solution (a mixed solvent of EC/EMC at a volume ratio of 1:3).

[Formula 3]

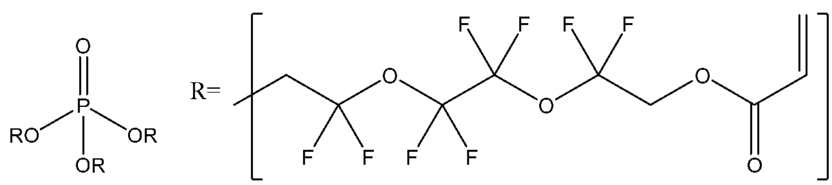

(3) Manufacture of lithium secondary battery

A cathode slurry was prepared by mixing $LiNi_{0.6}Co_{0.2}Mn_{0.2}O_2$ as a cathode active material, polyvinylidene fluoride (PVDF) as a binder, and carbon black as a conductive material at a weight ratio of 94:3:3. The cathode slurry was uniformly applied to an aluminum foil, and then dried and roll-pressed to fabricate a cathode.

An anode slurry was prepared by mixing natural graphite as an anode active material, SBR/CMC as a binder, and carbon black as a conductive material at a weight ratio of 96:3:1. The anode slurry was uniformly applied to a copper (Cu) foil, and then dried and roll-pressed to fabricate an anode.

A composite membrane manufactured using the above method was prepared. The cathode and the anode were placed so that they faced each other with the composite membrane interposed therebetween, and a tab portion of the cathode and a tab portion of the anode were welded, respectively.

An assembly of the welded cathode/composite membrane/anode was placed into a pouch, followed by sealing three sides of the pouch except for one side through which the second mixture was injected. At this time, a portion having the tab was included in the sealed portion. After injecting the second mixture through the remaining open side, the remaining open side was also sealed, followed by allowing it to be impregnated for 12 hours or more. Thereafter, a secondary battery was manufactured by heat curing in an oven at 70 °C for 1 hour.

The weight ratio of the flame retardant monomer to the composite membrane was 0.03.

### Examples 2 to 8

Lithium secondary batteries were manufactured in the same manner as in Example 1, except that the type of organic polymer, the weight ratio of the organic polymer to inorganic electrolyte, and the weight ratio of the flame retardant monomer to the composite membrane were changed as shown in Table 1 below during the preparation of the electrolyte for a secondary battery.

### Comparative Example 1

A cathode slurry was prepared by mixing $LiNi_{0.6}Co_{0.2}Mn_{0.2}O_2$ as a cathode active material, polyvinylidene fluoride (PVDF) as a binder, and carbon black as a conductive material at a weight ratio of 94:3:3. The cathode slurry was uniformly applied to an aluminum foil, and then dried and roll-pressed to fabricate a cathode.

An anode slurry was prepared by mixing natural graphite as an anode active material, SBR/CMC as a binder, and carbon black as a conductive material at a weight ratio of 96:3:1. The anode slurry was uniformly applied to a copper (Cu)

foil, and then dried and roll-pressed to fabricate an anode.

Polyethylene (PE) was prepared as a separation membrane. The cathode and the anode were placed so that they faced each other with the separation membrane interposed therebetween, and a tab portion of the cathode and a tab portion of the anode were welded respectively.

An assembly of the welded cathode/separation membrane/anode was placed into a pouch, and three sides of the pouch were sealed, leaving one side open for electrolyte injection ("electrolyte injection side"). At this time, a portion having the tabs was included in the sealed part. After injecting a compound represented by Formula 3 as an electrolyte and a flame retardant monomer at a weight ratio of 95:5, the remaining electrolyte injection side was also sealed, followed by allowing it to be impregnated for 12 hours or more. Thereafter, a secondary battery was manufactured by heat curing in an oven at 70 °C for 1 hour.

A solution, prepared by dissolving 1.0 M $LiPF_6$ in a mixed solvent of EC/EMC (3/7; volume ratio), and further adding 5 wt% of fluorinated ethylene carbonate (FEC), was used as the electrolyte.

## Comparative Example 2

A secondary battery was manufactured in the same manner as in Comparative Example 1, except that polyethylene coated with boehmite to a thickness of 3 μm was used as the separation membrane.

## Comparative Example 3

A lithium secondary battery was manufactured in the same manner as in Example 1, except that the weight ratio of the flame retardant monomer to the composite membrane was 0.002 during the preparation of the electrolyte for a secondary battery.

## Comparative Example 4

A lithium secondary battery was manufactured in the same manner as in Example 1, except that the weight ratio of the flame retardant monomer to the composite membrane was 0.4 during the preparation of the electrolyte for a secondary battery.

[TABLE 1]

| | Type of organic polymer | Weight ratio of organic polymer to inorganic electrolyte (organic polymer:inorganic electrolyte) | Weight ratio of flame retardant compound to composite membrane (or separation membrane) |
|---|---|---|---|
| Example 1 | PVDF | 50:50 | 0.03 |
| Example 2 | PVDF | 50:50 | 0.18 |
| Example 3 | PVDF | 50:50 | 0.004 |
| Example 4 | PVDF | 30:70 | 0.03 |
| Example 5 | PVDF | 20:80 | 0.03 |
| Example 6 | PS | 30:70 | 0.03 |
| Example 7 | PI | 30:70 | 0.03 |
| Example 8 | PVDF | 30:70 | 0.3 |
| Comparative Example 1 | - | - | 0.03 |
| Comparative Example 2 | - | - | 0.03 |
| Comparative Example 3 | PVDF | 50:50 | 0.002 |
| Comparative Example 4 | PVDF | 50:50 | 0.4 |

The specific components described in Table 1 are as follows.

PVDF: Polyvinylidene fluoride

PS: Polystyrene

PI: Polyimide

## Experimental Example 1: Evaluation of electrolyte

### (1) Measurement of porosity

The porosity of the electrolyte layers for a secondary battery according to the above-described examples and Comparative Example 3 was measured. The porosity was calculated using the density calculation method according to Equation 1 below.

[Equation 1]

$$\text{Porosity } (\%) = \left(1 - \frac{\frac{BW}{T_c}}{\rho_c}\right) \times 100$$

In Equation 1, BW denotes the basis weight (g/m$^2$) of the composite membrane (or separation membrane), $T_c$ denotes the thickness of the composite membrane (or separation membrane), and $\rho_c$ denotes the density (g/cm$^3$) of the composite membrane (or separation membrane).

The calculated porosity is shown in Table 2 below.

### (2) Evaluation of thermal shrinkage

The electrolyte layers for a secondary battery manufactured according to the above-described examples, and the electrolyte-immersed separation membranes and electrolyte layers prepared according to the comparative examples, were cut into pieces with dimensions of 2 cm × 2 cm and placed at 150°C, after which the cross-sectional area was measured over time.

From the measured cross-sectional areas, the cross-sectional area change rate was calculated according to Equation 2 below.

[Equation 2]

$$Cross - sectional\ area\ change\ rate\ (\%) = \frac{S_i - S_k}{S_i} \times 100$$

In Equation 2, Si denotes the initial cross-sectional area (4 cm$^2$), and $S_k$ denotes the cross-sectional area measured after m minutes.

The calculated cross-sectional area change rate is shown in Table 2 below.

### (3) Evaluation of combustion

The electrolyte layers for a secondary battery manufactured according to the above-described examples, and the electrolyte-immersed separation membranes and electrolyte layers manufactured according to the comparative examples, were subjected to combustion for 5 minutes to evaluate whether combustion occurred.

Combustion was evaluated as follows:

◦: Combustion area less than 10%
△: Combustion area from 10% to 20%
×: Combustion area greater than 20%

The evaluation results are shown in Table 2 below.

[TABLE 2]

| Classification | Porosity (%) | Cross-sectional area change rate (%) | | Combustion evaluation |
|---|---|---|---|---|
| | | At 20 minutes | At 50 minutes | |
| Example 1 | 53 | 2.4 | 10.5 | Δ |
| Example 2 | 53 | 1.8 | 9.3 | ○ |
| Example 3 | 53 | 4.2 | 15.7 | Δ |
| Example 4 | 58 | 0 | 0 | ○ |
| Example 5 | 62 | 0 | 0 | ○ |
| Example 6 | 60 | 0.3 | 5.8 | ○ |
| Example 7 | 55 | 0.2 | 5.2 | ○ |
| Example 8 | 58 | 0 | 0 | ○ |
| Comparative Example 1 | 42 (Separation membrane) | 94.0 | 96.5 | X |
| Comparative Example 2 | 49 (Separation membrane) | 42.1 | 63.9 | X |
| Comparative Example 3 | 53 | 5.2 | 21.1 | X |
| Comparative Example 4 | 53 | 2.3 | 10.6 | Δ |

FIGS. 5 and 6 are photographs showing the thermal shrinkage over time of the electrolyte layers for a secondary battery prepared according to Examples 5 and 6, respectively.

FIG. 9 is a photograph showing the combustion of the electrolyte layer for a secondary battery manufactured according to Example 5.

Referring to FIGS. 5, 6 and 9, and Table 2, the cross-sectional area change rate was 15.7% or less in the examples using composite membranes including organic polymers and inorganic electrolytes, where the weight ratio of the flame retardant compound to the composite membrane was 0.004 to 0.3.

FIGS. 7 and 8 are photographs showing the thermal shrinkage over time of electrolyte-immersed separation membranes prepared according to Comparative Examples 1 and 2, respectively.

FIGS. 10 and 11 are photographs showing the combustion of the electrolyte-immersed separation membranes and electrolyte layers prepared according to Comparative Examples 1 and 2, respectively.

Referring to FIGS. 7, 8 and 11, and Table 2, the cross-sectional area change rate exceeded 50% in the comparative examples that did not use a composite membrane.

**Experimental Example 2: Evaluation of lithium secondary battery**

**(1) Evaluation of OCV according to temperature**

The voltage of the lithium secondary batteries according to the above-described examples and comparative examples was set to 4.0 V. The open circuit voltage (OCV) change over time was then measured under conditions of 150°C and 100% SOC.

When 45 minutes had elapsed after the start of the measurement, the temperature was increased to 160°C. The OCV was measured before and after the temperature increase (i.e., the voltages measured at 30 minutes and 60 minutes) and at 120 minutes after the start of the measurement.

The OCV change rate and total OCV change rate were calculated using Equation 3 below.

[Equation 3]

$$OCV\ change\ rate\ (\%) = \frac{A_m - B_n}{A_m} \times 100$$

In Equation 3, $A_m$ denotes the voltage measured m minutes after the start of measurement, and $B_n$ denotes the voltage measured n minutes after the start of measurement.

Specifically, the OCV change rate is the OCV change rate calculated using $A_{30}$ and $B_{60}$, and the total OCV change rate is the OCV change rate calculated using $A_0$ and $B_{120}$.

The voltage and OCV change rates measured before and after heating to 160°C are shown in Table 3 below.

**(2) Evaluation of capacity retention**

After 250 cycles of repeated charging (CC-CV 2.0C, 4.2V, 0.05C cut-off) and discharging (CC 1.0C, 2.7V cut-off) were performed on the lithium secondary batteries manufactured according to the above-described examples and Comparative Examples in a chamber maintained at 25°C, the discharge capacity at the 250th cycle was calculated as a percentage of the discharge capacity at the first cycle to determine the capacity retention.
The measurement results are shown in Table 4 below.

[TABLE 3]

| Classification | Voltage (V) | | | | OCV change rate (%) | OCV total change rate (%) | Capacity retention (%) |
|---|---|---|---|---|---|---|---|
| | At 0 minutes (150°C) | At 30 minutes (150°C) | At 60 minutes (160°C) | At 120 minutes (160°C) | | | |
| Example 1 | 4.00 | 3.34 | 2.63 | 2.10 | 21.26 | 47.50 | 81.9 |
| Example 2 | 4.00 | 3.41 | 2.73 | 2.51 | 19.94 | 37.25 | 81.0 |
| Example 3 | 4.00 | 3.20 | 2.43 | 1.98 | 24.06 | 50.50 | 83.0 |
| Example 4 | 4.00 | 3.56 | 2.99 | 2.64 | 16.01 | 34.00 | 83.9 |
| Example 5 | 4.00 | 3.66 | 3.17 | 3.01 | 13.39 | 28.75 | 87.3 |
| Example 6 | 4.00 | 3.39 | 3.19 | 2.95 | 5.90 | 26.25 | 82.1 |
| Example 7 | 4.00 | 3.99 | 3.66 | 3.24 | 8.27 | 19.00 | 80.3 |
| Example 8 | 4.00 | 3.66 | 3.15 | 2.79 | 13.93 | 30.25 | 83.8 |
| Comparative Example 1 | 4.00 | 3.83 | 1.84 | 0.40 | 51.96 | 90.00 | 72.1 |
| Comparative Example 2 | 4.00 | 3.99 | 2.20 | 2.09 | 44.86 | 47.75 | 78.2 |
| Comparative Example 3 | 4.00 | 3.19 | 2.30 | 1.89 | 27.90 | 52.75 | 70.1 |
| Comparative Example 4 | 4.00 | 3.52 | 2.84 | 2.57 | 19.32 | 35.75 | 77.8 |

FIG. 12 is a graph showing the changes in OCV over time for the lithium secondary battery manufactured according to Examples 6 and 7 and Comparative Examples 1 and 2.
FIG. 13 is a graph showing the changes in discharge capacity (capacity retention) over the number of charge and discharge cycles for the lithium secondary battery manufactured according to Examples 4 and 5 and Comparative Example 2.
Referring to FIGS. 12 and 13, and Table 3, in examples using the composite membranes including organic polymers and inorganic electrolytes, where the weight ratio of the flame retardant compound to the composite membrane was 0.04 to 0.3, the total OCV change rate was 50.50% or less, and the capacity retention was 80.3% or more.
In comparative examples, where a composite membrane was not used or where a composite membrane was used but the weight ratio of the flame retardant compound to the composite membrane was less than 0.04 or greater than 0.3, the capacity retention decreased.
In Comparative Example 3, which used a composite membrane but reduced the weight ratio of the flame retardant compound to the composite membrane to 0.002, the total OCV change rate increased and the capacity retention decreased compared to Example 3, where the weight ratio of the flame retardant compound to the composite membrane was 0.004.
In Comparative Example 4, which used a composite membrane but increased the weight ratio of the flame retardant compound to the composite membrane to 0.4, the capacity retention decreased compared to Example 2, where the weight ratio of the flame retardant compound to the composite membrane was 0.18.

**Experimental Example 3: Evaluation of electrochemical stability**

The change in current was measured by sweeping the voltage at a constant rate in coin cells using the electrolyte layers for a lithium secondary battery prepared according to the above-described examples and comparative examples. Specifically, measurements were made at a scan rate of 1.0 mV/s over a voltage range of 3 V to 6 V.
The coin cell used stainless steel as the working electrode and Li foil as the counter electrode (serving as the reference electrode). The coin cell used herein had a Li foil-electrolyte layer-stainless steel structure.

FIG. 14 is a graph showing the changes in current over time measured by cyclic voltammetry (CV) for coin cells including the electrolyte layers for a lithium secondary battery prepared according to exemplary embodiments and comparative examples.

Specifically, the graph shows the change in current over time, measured by CV, for coin cells including the electrolyte layers for a lithium secondary battery prepared according to Examples 4 and 5 and Comparative Example 2, each independently evaluated twice.

Referring to FIG. 14, in Examples 4 and 5 using the electrolytes for a secondary battery according to exemplary embodiments, the surface oxidation rate decreased, resulting in a decrease in current over time compared to Comparative Example 2 using a liquid electrolyte.

In addition, as the content of the inorganic electrolyte increased, the degree of oxidation decreased, resulting in a decrease in current over time.

Therefore, when using the electrolytes for a secondary battery according to exemplary embodiments, high-voltage stability was improved compared to when using a liquid electrolyte.

## Claims

**1.** An electrolyte for a secondary battery comprising:

a lithium salt;
a composite membrane comprising an organic polymer and an inorganic electrolyte; and
a flame retardant compound comprising a phosphorus-containing functional group,
wherein the weight ratio of the flame retardant compound to the composite membrane is 0.004 to 0.3.

**2.** The electrolyte for a secondary battery according to claim 1, wherein the inorganic electrolyte comprises an oxide-based solid electrolyte.

**3.** The electrolyte for a secondary battery according to claim 1, wherein the flame retardant compound comprises fluorine atoms.

**4.** The electrolyte for a secondary battery according to claim 1, wherein the phosphorus-containing functional group comprises at least one of a phosphate group, a phosphite group, a phosphonate group, and a phosphazene group.

**5.** The electrolyte for a secondary battery according to claim 1, wherein the flame retardant compound is a flame retardant polymer.

**6.** The electrolyte for a secondary battery according to claim 1, wherein the flame retardant compound comprises a first flame retardant compound that is in contact with the interior and surface of the composite membrane, and a second flame retardant compound that is distributed on the exterior of the composite membrane.

**7.** The electrolyte for a secondary battery according to claim 6, wherein the composite membrane comprises pores, and at least a portion of the first flame retardant compound is distributed within the pores.

**8.** The electrolyte for a secondary battery according to claim 1, wherein the content of the organic polymer, based on the total weight of the composite membrane, is 5% by weight to 95% by weight.

**9.** The electrolyte for a secondary battery according to claim 1, wherein the composite membrane comprises pores, and the porosity of the composite membrane is 50% to 80%.

**10.** A lithium secondary battery comprising:

a case;
an electrode assembly comprising a cathode and anode repeatedly stacked; and
the electrolyte for a secondary battery according to claim 1, which is disposed between the cathode and the anode in the electrode assembly within the case, or distributed around the electrode assembly.

**11.** The lithium secondary battery according to claim 10, wherein the composite membrane of the electrolyte for a secondary battery is disposed as an electrolyte layer between the cathode and the anode in the electrode assembly.

**12.** A method for manufacturing an electrolyte for a secondary battery comprising:

preparing a first mixture by mixing an organic polymer, an inorganic electrolyte, a first solvent and a second solvent;
drying the first mixture to form a composite membrane;
impregnating the composite membrane with a second mixture comprising a flame retardant monomer and an electrolyte; and
curing the second mixture.

**13.** The method for manufacturing an electrolyte for a secondary battery according to claim 12, wherein the solubility of the organic polymer in the first solvent is greater than the solubility of the organic polymer in the second solvent.

**14.** The method for manufacturing an electrolyte for a secondary battery according to claim 12, wherein the organic polymer in the first mixture is dissolved in the first solvent and not dissolved in the second solvent.

**15.** The method for manufacturing an electrolyte for a secondary battery according to claim 12, wherein the step of drying the first mixture to form a composite membrane comprises:

removing the first solvent at a first temperature; and
removing the second solvent at a second temperature.

**16.** The method for manufacturing an electrolyte for a secondary battery according to claim 15, wherein the first temperature is lower than the second temperature.

**17.** The method for manufacturing an electrolyte for a secondary battery according to claim 12, wherein the electrolyte comprises a lithium salt.

**18.** The method for manufacturing an electrolyte for a secondary battery according to claim 12, wherein the second mixture further comprises a thermal initiator, and
the step of curing the second mixture comprises heat-treating the second mixture.

**19.** The method for manufacturing an electrolyte for a secondary battery according to claim 12, wherein the second mixture further comprises a photoinitiator, and
the step of curing the second mixture comprises irradiating the second mixture with light.

[FIG. 1]

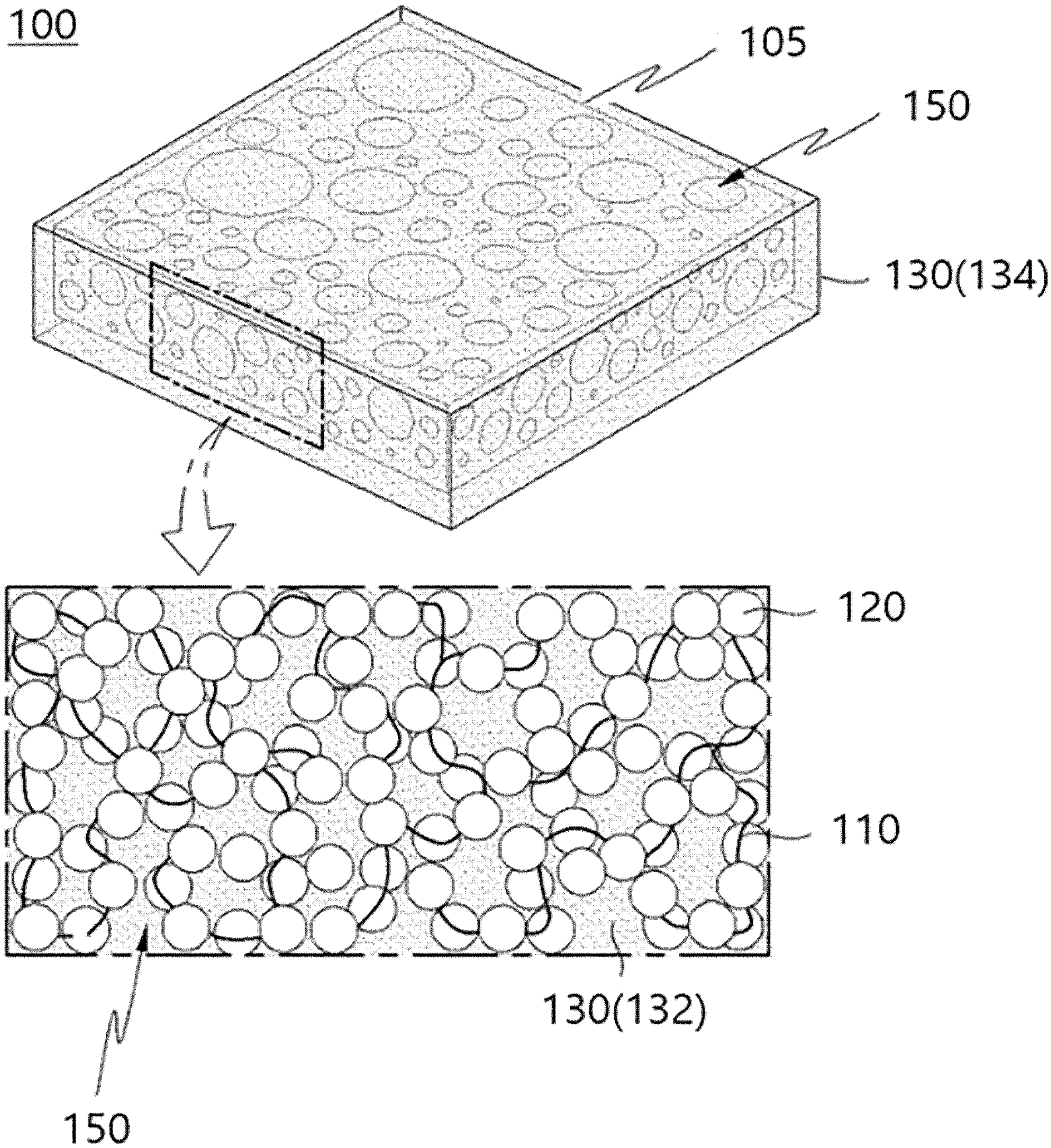

[FIG. 2]

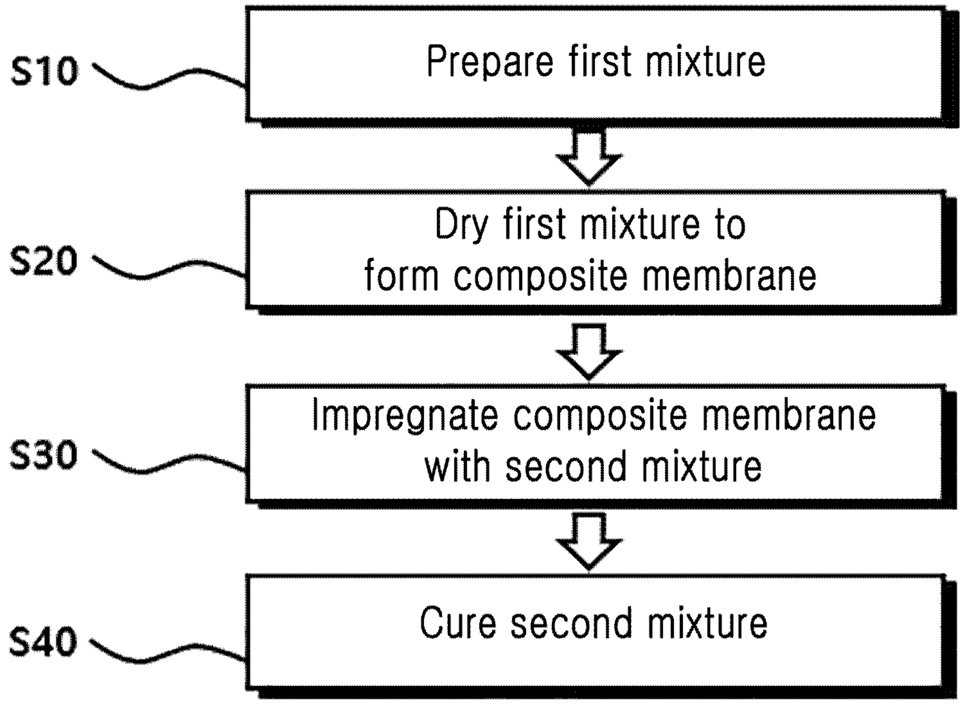
S10
Prepare first mixture
S20
Dry first mixture to form composite membrane
S30
Impregnate composite membrane with second mixture
S40
Cure second mixture

[FIG. 3]

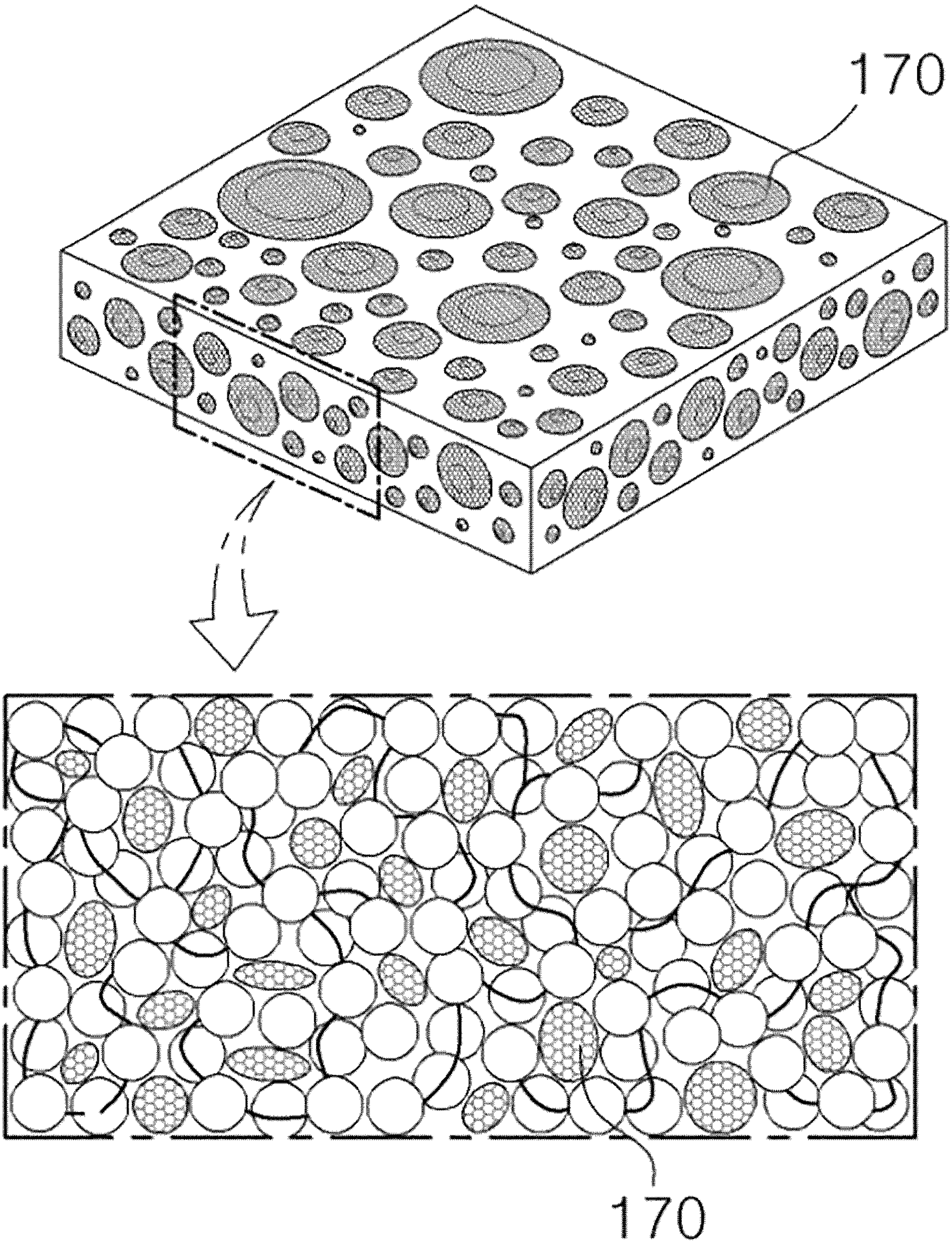

[FIG. 4]

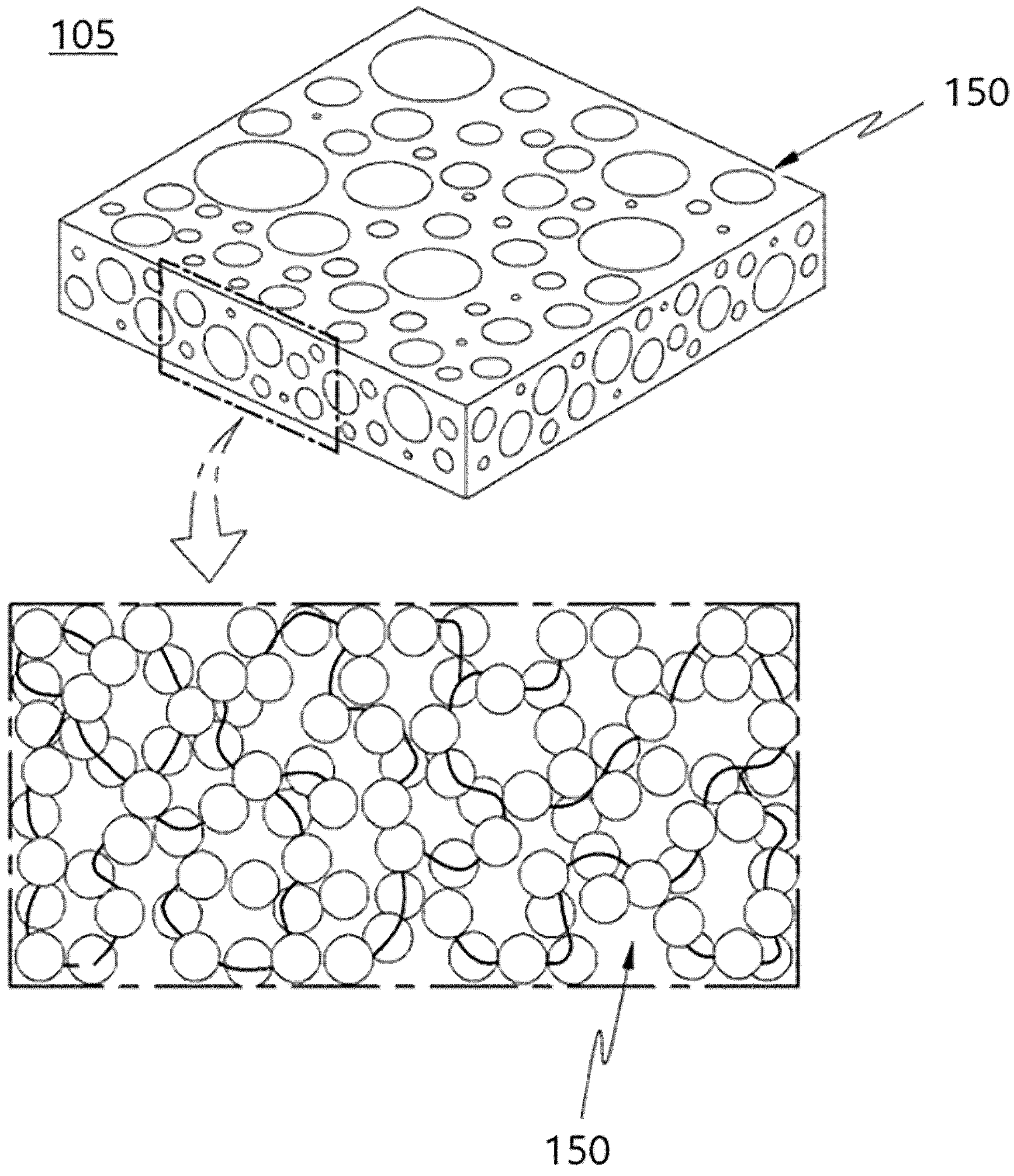

[FIG. 5]

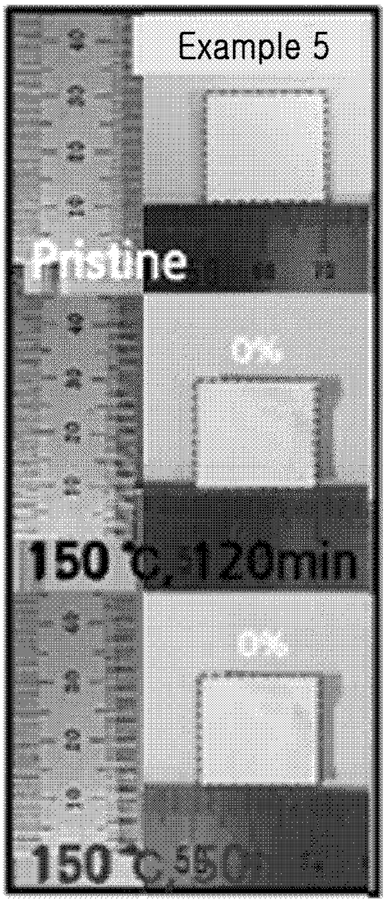

[FIG. 6]

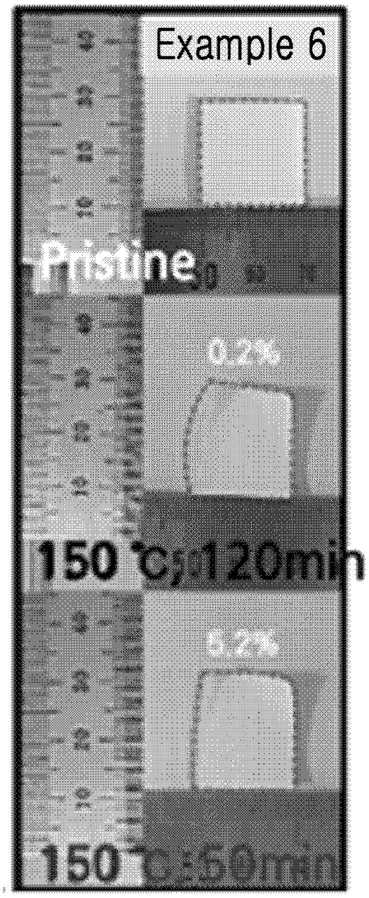

[FIG. 7]

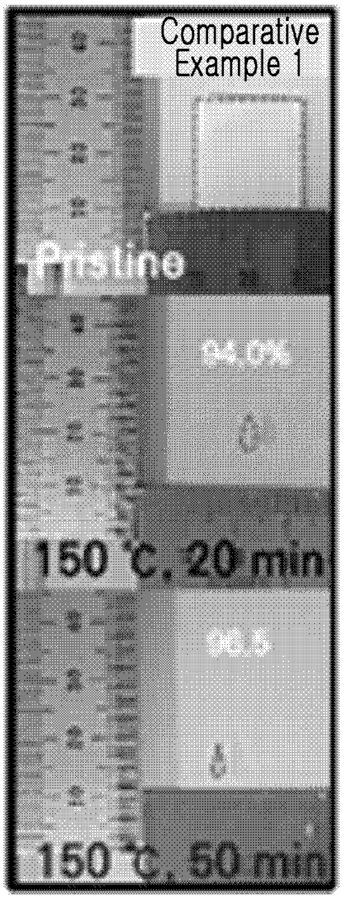
Comparative Example 1
Pristine
94.0%
150 °C, 20 min
96.5
150 °C, 50 min

[FIG. 8]

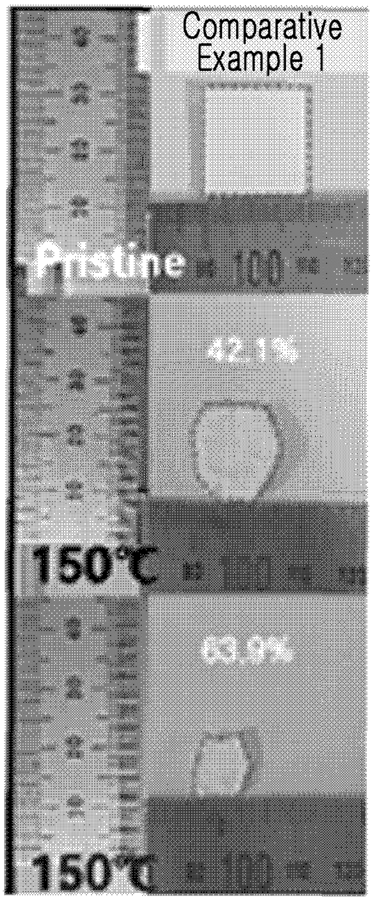

[FIG. 9]

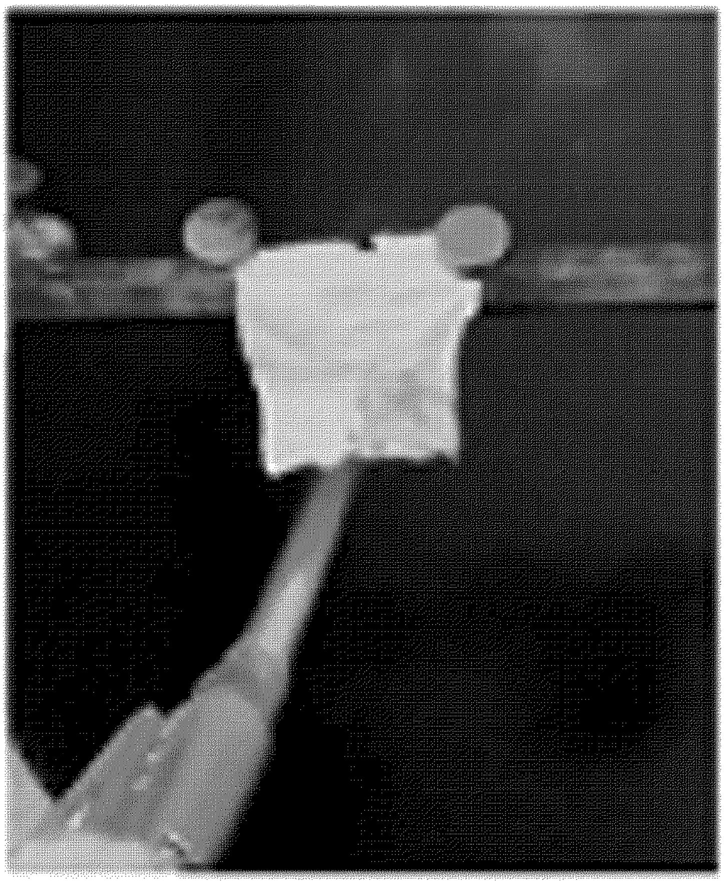

Example 5

[FIG. 10]

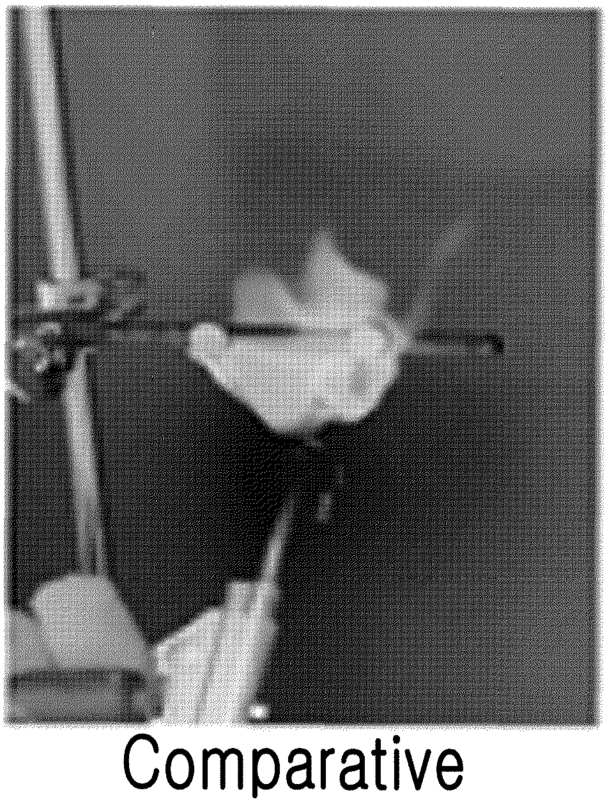

Comparative
Example 1

[FIG. 11]

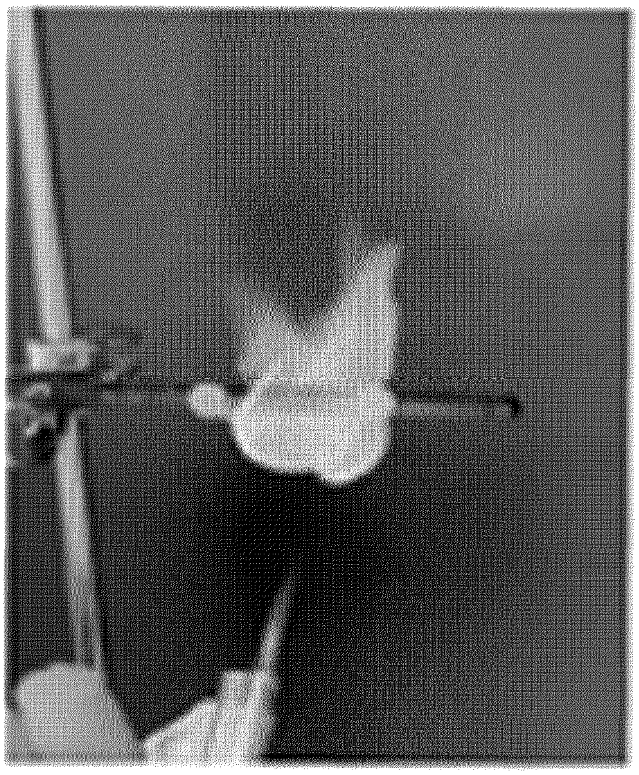

Comparative
Example 2

[FIG. 12]

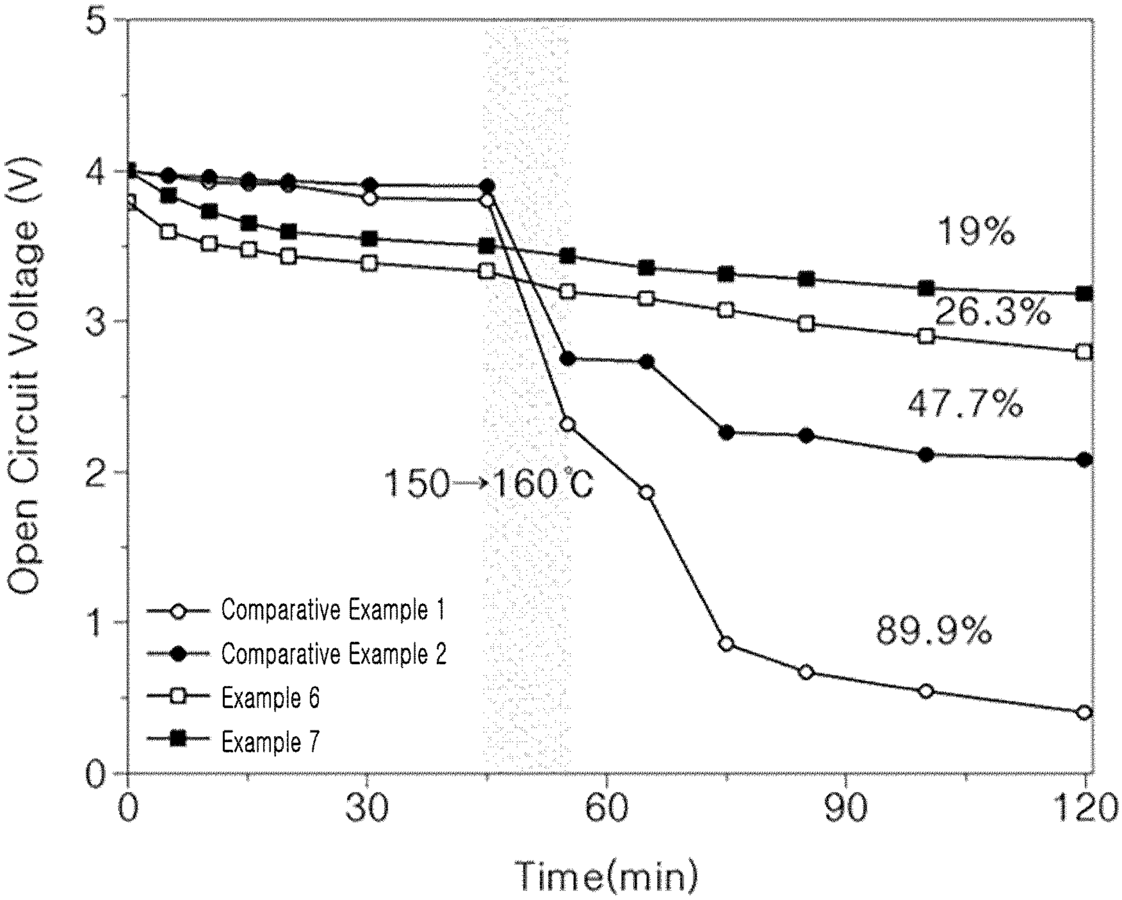
Open Circuit Voltage (V)
Time(min)
0
1
2
3
4
5
0
30
60
90
120
19%
26.3%
47.7%
89.9%
150→160℃
Comparative Example 1
Comparative Example 2
Example 6
Example 7

[FIG. 13]

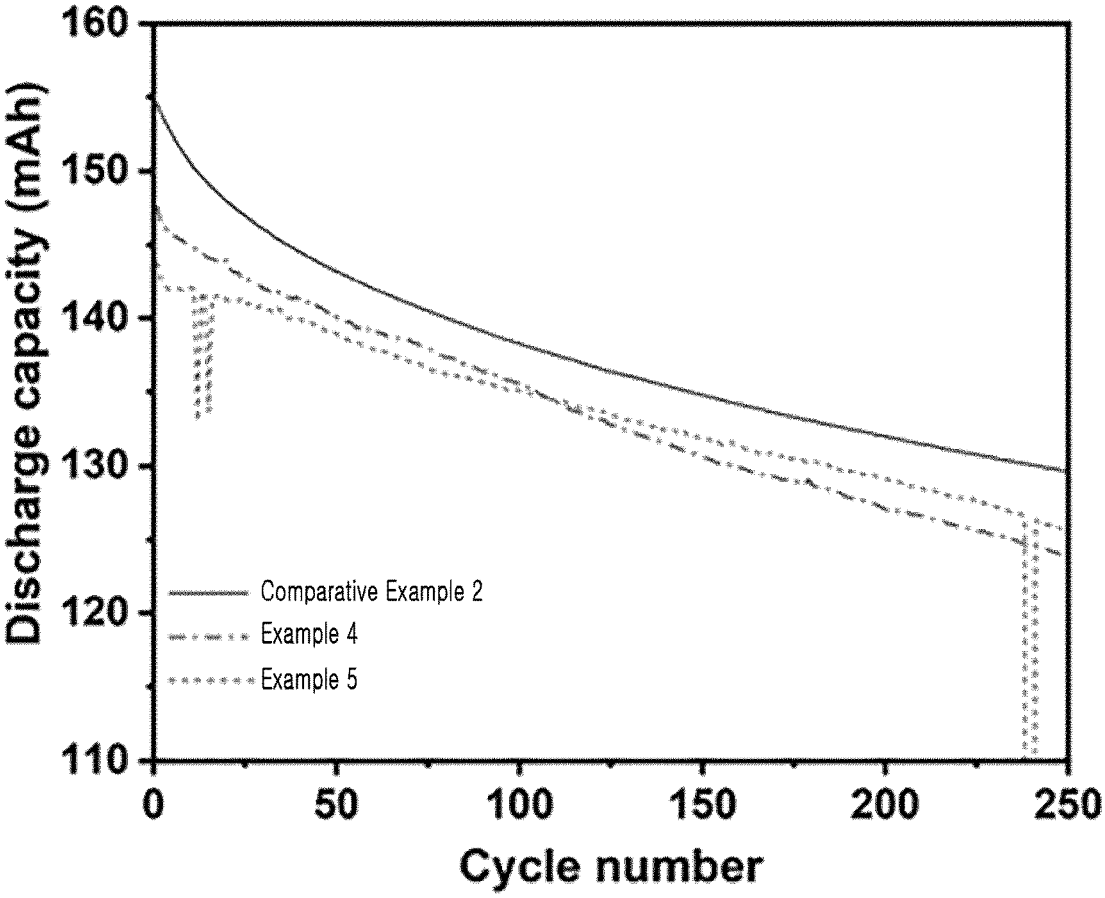
160
150
140
130
120
110
Discharge capacity (mAh)
0
50
100
150
200
250
Cycle number
Comparative Example 2
Example 4
Example 5

[FIG. 14]

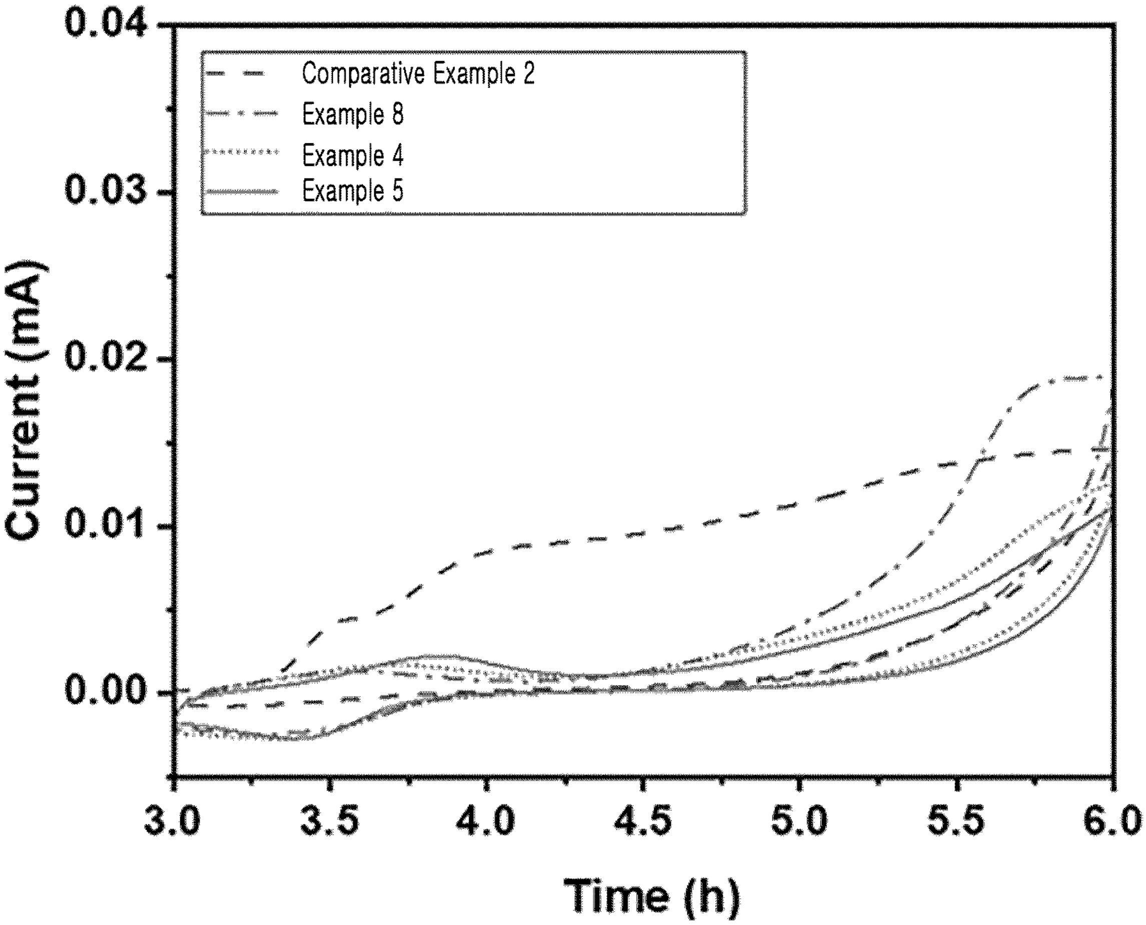
Comparative Example 2
Example 8
Example 4
Example 5
0.04
0.03
0.02
0.01
0.00
Current (mA)
3.0
3.5
4.0
4.5
5.0
5.5
6.0
Time (h)

**INTERNATIONAL SEARCH REPORT**

International application No. **PCT/KR2024/095536**

**A. CLASSIFICATION OF SUBJECT MATTER**

**H01M 10/056**(2010.01)i; **H01M 10/052**(2010.01)i; **H01M 10/054**(2010.01)i; **H01M 10/0569**(2010.01)i; **H01M 10/0565**(2010.01)i

According to International Patent Classification (IPC) or to both national classification and IPC

**B. FIELDS SEARCHED**

Minimum documentation searched (classification system followed by classification symbols)

H01M 10/056(2010.01); H01M 10/052(2010.01); H01M 10/0565(2010.01); H01M 10/44(2006.01); H01M 12/08(2006.01); H01M 4/62(2006.01); H01M 50/44(2021.01); H01M 50/451(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차 전지(secondary battery), 전해질(electrolyte), 유기 고분자(organic polymer), 무기 전해질(inorganic electrolyte), 복합막(hybrid layer), 난연성 화합물(flame retardant compound), 함침(impregnating), 경화(curing)

**C. DOCUMENTS CONSIDERED TO BE RELEVANT**

| Category* | Citation of document, with indication, where appropriate, of the relevant passages | Relevant to claim No. |
|---|---|---|
| X | US 2022-0407183 A1 (GLOBAL GRAPHENE GROUP, INC.) 22 December 2022 (2022-12-22) See claims 1, 5, 9-10 and 24; and paragraphs [0031], [0036], [0042], [0058], [0061] and [0202]-[0203]. | 1-5,8-11 |
| A | | 6-7,12-19 |
| A | JP 2022-093903 A (ABRI CO., LTD.) 24 June 2022 (2022-06-24) See entire document. | 1-19 |
| A | US 2022-0238915 A1 (GLOBAL GRAPHENE GROUP, INC.) 28 July 2022 (2022-07-28) See entire document. | 1-19 |
| A | KR 10-2019-0086775 A (NANOTEK INSTRUMENTS, INC.) 23 July 2019 (2019-07-23) See entire document. | 1-19 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 June 2024** | **26 June 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
**PCT/KR2024/095536**

**C. DOCUMENTS CONSIDERED TO BE RELEVANT**

| Category* | Citation of document, with indication, where appropriate, of the relevant passages | Relevant to claim No. |
|---|---|---|
| A | KR 10-2017-0092262 A (KOREA INSTITUTE OF INDUSTRIAL TECHNOLOGY) 11 August 2017 (2017-08-11)<br>See entire document. | 1-19 |

Form PCT/ISA/210 (second sheet) (July 2022)

**INTERNATIONAL SEARCH REPORT**
**Information on patent family members**

International application No.
**PCT/KR2024/095536**

| Patent document cited in search report | Publication date (day/month/year) | Patent family member(s) | Publication date (day/month/year) |
|---|---|---|---|
| US 2022-0407183 A1 | 22 December 2022 | WO 2022-256837 A1 | 08 December 2022 |
| JP 2022-093903 A | 24 June 2022 | JP 7031100 B1 | 08 March 2022 |
| US 2022-0238915 A1 | 28 July 2022 | CN 117083744 A | 17 November 2023 |
| | | JP 2024-505190 A | 05 February 2024 |
| | | KR 10-2023-0145359 A | 17 October 2023 |
| | | US 11830976 B2 | 28 November 2023 |
| | | WO 2022-159987 A1 | 28 July 2022 |
| KR 10-2019-0086775 A | 23 July 2019 | CN 110268573 A | 20 September 2019 |
| | | CN 110268573 B | 29 November 2022 |
| | | JP 2020-504420 A | 06 February 2020 |
| | | JP 7312700 B2 | 21 July 2023 |
| | | KR 10-2571111 B1 | 25 August 2023 |
| | | US 10084220 B2 | 25 September 2018 |
| | | US 10680287 B2 | 09 June 2020 |
| | | US 2018-0166759 A1 | 14 June 2018 |
| | | US 2018-0366798 A1 | 20 December 2018 |
| | | WO 2018-111807 A1 | 21 June 2018 |
| KR 10-2017-0092262 A | 11 August 2017 | JP 2019-505074 A | 21 February 2019 |
| | | JP 6652752 B2 | 26 February 2020 |
| | | KR 10-1793168 B1 | 20 November 2017 |
| | | US 10886560 B2 | 05 January 2021 |
| | | US 2019-0051934 A1 | 14 February 2019 |
| | | WO 2017-135553 A1 | 10 August 2017 |
| | | WO 2017-135553 A8 | 24 January 2019 |

Form PCT/ISA/210 (patent family annex) (July 2022)